# EUROPEAN PATENT APPLICATION

(11) **EP 4 550 751 A1**
(43) Date of publication of application: **07.05.2025**
(21) Application number: 24191952.1
(22) Date of filing: 31.07.2024
(51) Int. Cl.: H04L 47/30, H04L 49/90, H04L 47/27

(54) **MANAGEMENT OF PACKET TRANSMISSION AND RESPONSES**

(30) Priority: 30.10.2023 US 202363546509 P; 30.10.2023 US 202363546513 P; 30.10.2023 US 202363546519 P; 30.10.2023 US 202363546505 P; 30.10.2023 US 202363546410 P; 20.12.2023 US 202318391540
(71) Applicant: INTEL Corporation, Santa Clara, CA 95054 (US)
(72) Inventor: FARROKHBAKHT, Hossein, Santa Clara, 95054 (US); PETRINI, Fabrizio, Santa Clara, 95054 (US)
(74) Representative: Rummler, Felix

(57) **Abstract**

Examples described herein relate to a router. In some examples, the router includes an interface and circuitry coupled to the interface. In some examples, the circuitry is to reserve a memory region in a buffer for a response sent by a receiver of a forwarded packet.

## Description

### RELATED APPLICATIONS

This application claims the benefit of priority to U.S. Provisional Application Number 63/546,410, filed October 30, 2023; U.S. Provisional Application Number 63/546,505, filed October 30, 2023; U.S. Provisional Application Number 63/546,519, filed October 30, 2023; U.S. Provisional Application Number 63/546,509, filed October 30, 2023; U.S. Provisional Application Number 63/546,513, filed October 30, 2023. The entire contents of those applications are incorporated by reference.

### BACKGROUND

In a transactional network on chip (NoC), a receiver network interface device sends acknowledgments (ACKs) to senders to indicate packets arrived at the receiver, but the receiver network interface device sends negative ACKs (NACKs) to senders when the packets fail to arrive at the receiver. A transmitter can utilize source-routing to encode, into a packet header, an entire routing path between a source transmitter and receiver destination through one or more routers. However, when ACKs/NACKs encounter a faulty link on the return path towards corresponding senders, the router connected to the faulty link is unable to select another path to evade the faulty link. Thus, for source-routing, ACKs/NACKs may not reach to the corresponding senders and senders may not retransmit certain packets. In some cases, senders may not receive notification of a faulty link and can re-use a path that includes a faulty link to transmit other packets.

### BRIEF DESCRIPTION OF THE DRAWINGS

FIG. 1 depicts an example of flow control in a network.
FIG. 2 depicts an example router that can be used in an initiator router or a target router.
FIG. 3 depicts an example packet format.
FIG. 4 depicts a breadcrumb table.
FIG. 5 depicts an example of setting a values in breadcrumb tables associated with different routers.
FIG. 6 demonstrates a walkthrough example of clearing the breadcrumb tables.
FIG. 7 illustrates a scenario in which a faulty link is detected.
FIG. 8 depicts an example in which a router sends a packet to a second router.
FIG. 9 depicts an example breadcrumb table.
FIG. 10 depicts a MASK table.
FIG. 11 depicts examples of packet headers.
FIGs. 12A-12B depict an example of reserving buffer slots while forward packet traverse the routers.
FIGs. 13A-13C demonstrate generating the backward response.
FIG. 14 demonstrates an endpoint congestion in which multiple senders send packets through routers.
FIG. 15 depicts examples of packet headers.
FIGs. 16A-16B illustrate a process for dealing with an endpoint congestion.
FIG. 17 depicts a scenario in which in-order packet delivery is violated even though a deterministic routing is employed.
FIG. 18 depicts examples of packet formats.
FIG. 19 depicts an example whereby a reorder table ensures in-order delivery with a walkthrough example.
FIGs. 20A and 20B depict an example process.
FIG. 21A-21B depict example network interface devices.
FIG. 22A-22B depict example switches.
FIG. 23 depicts an example system.

### DETAILED DESCRIPTION

At least for network interface devices that utilize source-routing, in network on chip (NoC), mesh, or off-chip networking environments, various examples herein can attempt to reduce network congestion and dropping of response (e.g., backward messages) by performing one or more of: applying a buffer reservation policy for backward messages (e.g., one or more packets from a destination) based on receipt of forward packets traversing the network to guarantee buffer space for the backward packets; dropping forward packets (e.g., packets sent from a source to a destination through a network) if forward packets cannot make progress due to a congested next hop switch, anticipated congested receiver endpoint one or more hops away, or congested receiver endpoint; dropping forward packets one or multiple hops before they reach the faulty links; select another path for forward packets from the source to the destination to avoid the faulty links; dropping forward packets one or multiple hops before forward packets reach the congested nodes (e.g., network interface devices); or causing reduction or stopping of forward packet injection into the network if a specified number of acknowledgments have not been received yet. Some examples of an endpoint receiver can provide in-order packet delivery of forward packets in a flow to a network protocol stack of a receiver network interface device or associated host server system, such as where a router dropped one or more packets of the flow.

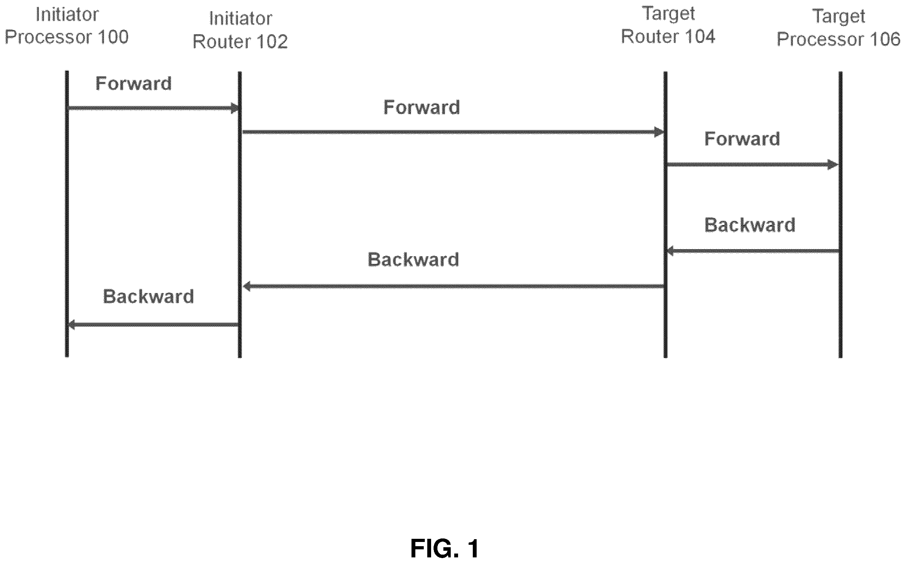

FIG. 1 depicts an example of flow control in a network. A network can include a source sender, endpoint receiver, and one or more routers in a network on chip (NoC) or off-chip networks such as Ethernet networks. Examples can use a transactional network that utilizes a forward phase and a backward phase. A forward message can include one or more packets generated during a forward phase by an initiator. A forward path can include a router path that the forward packets traverse to reach the targets/destinations. In the forward phase, transactions are initiated by generating the forward packets and sending them to their respective destination(s). As these forward packets traverse a path, the input port used to receive the forward packet is recorded by a router, to route backward messages, as described herein, so that forward and backwards packets traverse the same path through routers, but in opposite directions. A forward message can represent various types of requests, including coherent messages, Put and Get operations, or collective messages.

When the forward message is received by the destination(s), the backward phase commences, which can include generating and transmitting a backward message. Backward message can include one or more packets sent by the destination(s) to the initiator of the forward packets over the same path that the forward packet traversed. A backward path can include a router path that the backward packets traverses to reach the initiator of the forward packets. In some examples, packets transmitted in the backward path can use the same intermediate routers as those of the forward path. A backward message may include data, endpoint buffer availability, a transaction result, e.g., ACK/NACK, and other information. ACKs can be sent to the senders when forward packets successfully reach their destinations, and NACKS can be generated when forward packets fail to reach a destination.

Initiator processor or device 100 (e.g., central processing unit (CPU), graphics processing unit (GPU), accelerator, or network interface device) can cause transmission of a forward message (e.g., one or more packets) to a target processor 106 (e.g., CPU, GPU, accelerator, or network interface device). Various examples of a forward message are described herein. One or more routers 102 to 104 can forward the forward message to target processor 106. In response to receipt of the forward message, target processor 106 can cause transmission of a backward message to initiator processor 100, through routers 104 and 102. Various examples of a backward message are described herein. Note that a forward message can be sent from target processor 106 to initiator processor 100 and receive a backward message from initiator processor 100.

As described herein, initiator router 102 can perform selective dropping of packets based on data that includes one or more of: a breadcrumb table, which records an incoming port and a local tag (per pair link) of a forward packet; a hotspot table, which records the endpoint congestion (per pair link); fault table, which records the faulty links (per pair link); a reorder table (per pair link), which records the sequence number of an out-of-order packet per source and destination pair; an injection table, which can be used to stop injection of packets by recording un-ACKed packets per source and can be used for packet re-transmissions by storing a copy of injected packets. Initiator router 102 can apply a reservation policy to reserve buffer space for backward packets on the forward path to attempt to avoid dropping a backward packet due to lack of buffer space and increase a likelihood a backward packet will be forwarded to initiator processor 100.

A packet may be used herein to refer to various formatted collections of bits that may be sent across a network, such as Ethernet frames, IP packets, TCP segments, UDP datagrams, etc. Also, as used in this document, references to L2, L3, L4, and L7 layers (layer 2, layer 3, layer 4, and layer 7) are references respectively to the second data link layer, the third network layer, the fourth transport layer, and the seventh application layer.

A flow can include a sequence of packets being transferred between two endpoints, generally representing a single session using a known protocol. Accordingly, a flow can be identified by a set of defined tuples and, for routing purpose, a flow is identified by the two tuples that identify the endpoints, e.g., the source and destination addresses. For content-based services (e.g., load balancer, firewall, intrusion detection system, etc.), flows can be differentiated at a finer granularity by using N-tuples (e.g., source address, destination address, IP protocol, transport layer source port, and destination port). A packet in a flow is expected to have the same set of tuples in the packet header. A packet flow to be controlled can be identified by a combination of tuples (e.g., Ethernet type field, source and/or destination IP address, source and/or destination User Datagram Protocol (UDP) ports, source/destination TCP ports, or any other header field) and a unique source and destination queue pair (QP) number or identifier. A packet may be used herein to refer to various formatted collections of bits that may be sent across a network, such as Ethernet frames, IP packets, TCP segments, UDP datagrams, etc. Also, as used in this document, references to L2, L3, L4, and L7 layers (layer 2, layer 3, layer 4, and layer 7) are references respectively to the second data link layer, the third network layer, the fourth transport layer, and the seventh application layer.

Reference to flows can instead or in addition refer to tunnels (e.g., Multiprotocol Label Switching (MPLS) Label Distribution Protocol (LDP), Segment Routing over IPv6 dataplane (SRv6) source routing, VXLAN tunneled traffic, GENEVE tunneled traffic, virtual local area network (VLAN)-based network slices, technologies described in Mudigonda, Jayaram, et al., "Spain: Cots data-center ethernet for multipathing over arbitrary topologies," NSDI. Vol. 10. 2010 (hereafter "SPAIN"), and so forth.

In some examples, network interface device, switch, router, and/or receiver network interface device can include one or more of: a network interface controller (NIC), a remote direct memory access (RDMA)-enabled NIC, SmartNIC, router, switch, forwarding element, infrastructure processing unit (IPU), data processing unit (DPU), or edge processing unit (EPU). An edge processing unit (EPU) can include a network interface device that utilizes processors and accelerators (e.g., digital signal processors (DSPs), signal processors, or wireless specific accelerators for Virtualized radio access networks (vRANs), cryptographic operations, compression/decompression, and so forth). In some examples, network interface device, switch, router, and/or receiver network interface device can be implemented as one or more of: one or more processors; one or more programmable packet processing pipelines; one or more accelerators; one or more application specific integrated circuits (ASICs); one or more field programmable gate arrays (FPGAs); one or more memory devices; one or more storage devices; or others.

For a failed link, memory allocated for response packets for an associated connection can be released by a router to store forward or backward packets for other links and/or the associated connection can be torn down or restarted.

Initiator processor or device 100 can utilize programable reliable transport technologies for transmitted packets. For example, a sender (e.g., host system and/or network interface device) can utilize a reliable transport with direct data placement of data using remote direct memory access (RDMA) or other technologies whereby a sender network interface device can perform direct writes or reads to copy content of buffers across a connection without the operating system managing the copies. A network interface device or other interface to a connection can implement a direct memory access engine and create a channel from its RDMA engine though a bus to application memory. A send queue and receive queue can be used to transfer work requests and are referred to as a Queue Pair (QP). A requester can place work request instructions on its work queues that tells the interface contents of what buffers to send to or receive content from. A work request can include an identifier (e.g., pointer or memory address of a buffer). For example, a work request placed on a send queue (SQ) can include an identifier of a message or content in a buffer (e.g., app buffer) to be sent. By contrast, an identifier in a work request in a Receive Queue (RQ) can include a pointer to a buffer (e.g., app buffer) where content of an incoming message can be stored. An RQ can be used to receive an RDMA-based command or RDMA-based response. A Completion Queue (CQ) can be used to notify when the instructions placed on the work queues have been completed.

In some examples, reliable transport can be based on Transmission Control Protocol (TCP), User Datagram Protocol (UDP), Generic Routing Encapsulation (GRE), quick UDP Internet Connections (QUIC), Multipath TCP (MPTCP), MultiPath QUIC (MPQUIC), or others. Multiple different congestion control (CC) schemes can be utilized for a reliable transport.

Explicit Congestion Notification (ECN), defined in RFC 3168 (2001), allows end-to-end notification of network congestion whereby the receiver of a packet echoes a congestion indication to a sender. A packet sender can reduce its packet transmission rate in response to receipt of an ECN. Use of ECN can lead to packet drops if detection and response to congestion is slow or delayed. TCP CC is based on heuristics from measures of congestion such as network latency or the number of packet drops.

Other congestion control schemes include Google's Swift, Amazon's SRD, and Data Center TCP (DCTCP), described for example in RFC-8257 (2017). DCTCP is a TCP congestion control scheme whereby when a buffer reaches a threshold, packets are marked with ECN and the end host receives markings and sends the marked packets to a sender. The sender can adjust its transmit rate by adjusting a congestion window (CWND) size to adjust a number of sent packets for which acknowledgement of receipt was not received. In response to an ECN, a sender can reduce a CWND size to reduce a number of sent packets for which acknowledgement of receipt was not received. Swift, SRD, DCTCP, and other CC schemes adjust CWND size based on indirect congestion metrics such as packet drops or network latency.

High Precision Congestion Control (HPCC) is a congestion control system utilized for remote direct memory access (RDMA) communications that provides congestion metrics to convey precise link load information. HPCC is described at least in Li et al., "HPCC: High Precision Congestion Control," SIGCOMM (2019). HPCC leverages in-network telemetry (INT) (e.g., Internet Engineering Task Force (IETF) draft-kumar-ippm-ifa-01, "Inband Flow Analyzer" (February 2019)). HPCC uses in-band telemetry INT to provide congestion metrics measured at intermediary switches.

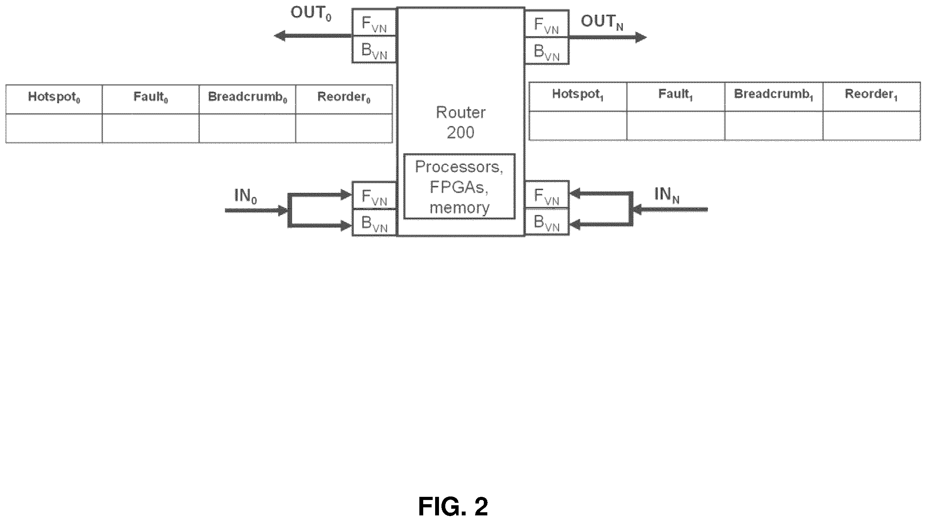

FIG. 2 depicts an example router that can be used in an initiator router or a target router. As described herein, router 200 include processors, field programmable gate arrays (FPGAs), memory, network interfaces and other circuitry configured to store forward and backward packet meta-data (e.g., breadcrumb table, a fault table, a hotspot table, and a reorder table) and utilize such meta-data to perform one or more of: determine an output port to utilize to forward a backward packet based on an input port of the corresponding forward packet; identify a congested or malfunctioning router one or multiple hops before the congested or malfunctioning router and determine whether to drop a packet instead of forwarding to the identified congested or malfunctioning router based on receipt of one or more NACK messages; and/or based on detection of a drop of a packet of a flow: drop subsequently received packets of the flow and based on receipt of a packet associated with the dropped packet of the flow, forward the received packet and subsequent received packets of the flow.

A sender (e.g., server and/or network interface device) of a forward packet can include route information and a local tag are incorporated into the packet header (e.g., new header field in IPv4, IPv6, Ethernet, or others). The route information can be used for routing forward packets to their intended destinations of the entire path. During the forward phase, at each hop, router 200 can reads the next hop output port from the route information, sends the forward packet to the specified outgoing link, and removes the header portion corresponding to the current hop by performing a left shift. In connection with end-to-end flow control, router 200 can utilize a tracking table or data (e.g., breadcrumb table), for a link pair of routers. The table can track outgoing packets from router 200, and associated input ports. While forward packets are in transit, each router records the used incoming ports and the tag carried by the forward packet in a corresponding breadcrumb table. A local tag assigned by an upstream router, in a header of a received packet, can be stored in a free entry of the corresponding breadcrumb table at the current router. Router 200 can overwrite the upstream tag with an index of the used entry. In other words, within a breadcrumb table of a router, an entry is assigned a local tag that points to the previous tag and the input port. For an outgoing forward packet, the router can record the incoming port and the local tag in the entry.

Router 200 can replace the upstream router's tag (e.g., the previous tag) with a new tag (e.g., the index of the breadcrumb entry) in the forward packet and forward the packet to the downstream router. The same router can identify an entry for the backward packet in its breadcrumb table based on the tag of the backward packet, so that the router can locate an output port in the breadcrumb table upon receiving the backward packet. Router 200 can replace the upstream router's tag (e.g., the index of its own table) with the retrieved tag (e.g., the index of the downstream table). Router 200 can utilize the incoming port as an output port to route a response to the forward packet, e.g., a backward packet, to the initiator of the forward packet. In some examples, the incoming port for a request can be used for an output port for a response (e.g., one or more packets), so that a request and its response share the same path. In other words, a response packet traverses through the exact path that the request packet has crossed over.

As described herein, router 200 can pro-actively reserve buffer slots for backward packets on a forward path in memory. As a result, space for the backward packets can be available in buffers of routers while traversing a backward path. In other words, as the forward packets traverse their path, router 200 can reserve buffer spaces for the backward packets to be received in the future, to complete the transaction. By setting aside these buffer slots, buffer space is available for the backward packets upon the arrival. As the backward packets traverse the routers over the return path, router 200 can release pre-reserved buffer slots upon their departure from router 200.

As described herein, router 200 can assign a virtual network to the Forward packets (F_{VN}) and a virtual network can be assigned to the backward packets (e.g., response) (B_{VN}) so that forward packets can only use F_{VN}, and Backward packets can only use B_{VN}. A forward packet can move from an input buffer of F_{VN} to an output buffer of F_{VN} if the downstream buffer has enough credit and the corresponding input buffer of B_{VN} has enough space for its future backward packet. If both conditions are satisfied, router 200 can proactively reserve a buffer space in the input buffer of B_{VN} for the backward packet, and router 200 can transmit the forward packet from the output buffer. Should either condition not be met, router 200 can drop the forward packet. Therefore, the input F_{VN} may not be filled, as the forward packets either advance or are dropped. On the other hand, as space for the backward packets is proactively reserved, they are not subject to the credit flow control and can traverse freely over the B_{VN}.

As described herein, router 200 can drop forward packets when they cannot advance due to congestion in a downstream hop, or the buffer space is not available over the return path for its future Backward packet. When a packet is dropped, router 200 can send a NACK to a sender of the forward packet to inform it on the drop location and the drop reason by which the sender can act accordingly.

Discussion next turns to various examples. Various examples described with respect to sub-titles (e.g., BREADCRUMB TABLE, FAULT PREDICTION, RESERVATION POLICY FOR BACKWARD MESSAGES, HOTSPOT TABLE, IN-ORDER PACKET DELIVERY, EXAMPLE PROCESS, OR EXAMPLE SYSTEM) can be combined with examples described with respect to one or more other sub-headings and vice versa (e.g., BREADCRUMB TABLE, FAULT PREDICTION, RESERVATION POLICY FOR BACKWARD MESSAGES, HOTSPOT TABLE, IN-ORDER PACKET DELIVERY, EXAMPLE PROCESS, OR EXAMPLE SYSTEM).

### BREADCRUMB TABLE

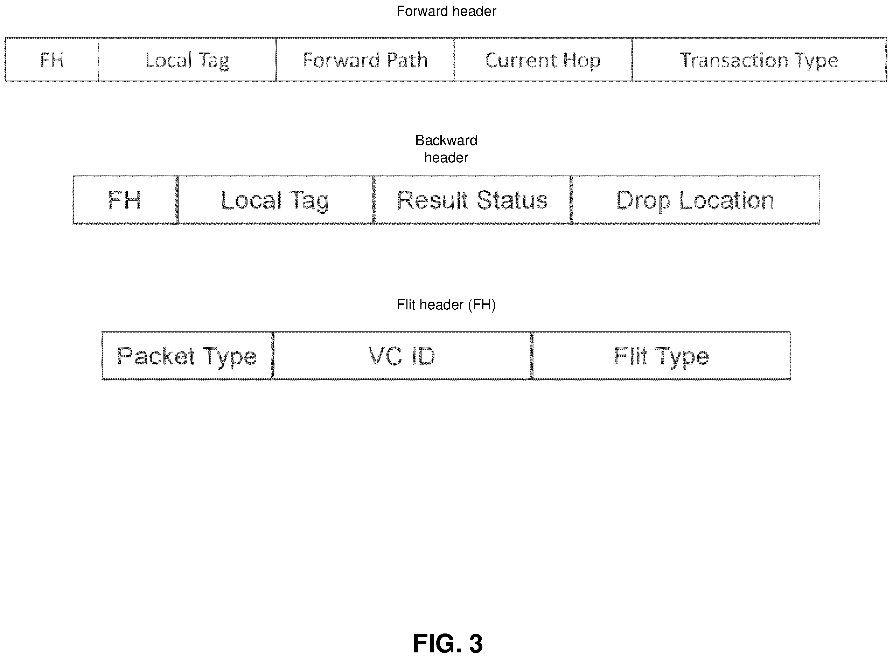

FIG. 3 depicts an example packet format. In some examples, a forward packet header can include one or more of the following fields:

| Field | Example description |
|---|---|
| Flit header (FH) | Identifies packet type, virtual channel identifier, and flit position. |
| Local tag | Router assigned tag |
| Forward path / routing field | The output ports per hop from the source to destination. This field can be based on source routing or adjusted by an intermediate router. |
| Current Hop | A pointer to the Forward path field. Router determines the appropriate output port number based on current hop. After reading Current Hop field, router increments the hop count by one. |
| | This field can be set to a number of hops between the source and destination. As a packet passes through a router, the router can update the hop number by decrementing it by |
| | 1. This field reveals the drop location. |
| Transaction Type | Read, Write, ACK, NACK etc. |

In some examples, a backward packet header can include one or more of the following fields.

| Field | Example description |
|---|---|
| Result status | ACK/NACK, the reason of failure |
| Hop Number of the Backward Header | The hop number field of the Forward packet can be carried in this field. |
| Drop Location | Copy of hop number field of the Forward packet to this field. |
| Telemetry data | Priority level of packet that was dropped. Congestion information. |

Telemetry data can be included in a packet header or payload. Examples of telemetry data can include congestion information based on High Precision Congestion Control (HPCC) or in-network telemetry (INT). HPCC can utilize in-network telemetry (INT) to convey precise link load information. Note that telemetry data can be utilized in other forward and/or backward packet formats described herein.

Some examples eliminate a need for storing the routing information in the header of backward packets, reducing overhead in backward packets.

In some examples, a flit header can include one or more of the following fields:

| Field | Example description |
|---|---|
| Packet Type | Forward or Backward |
| VC ID | The virtual channel number the packet is using. |
| Flit type | Head, tail, body, head-tail |

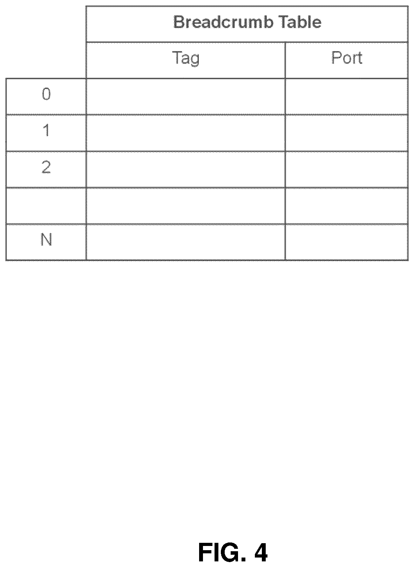

FIG. 4 depicts a breadcrumb table with N + 1 entries (e.g., entries 0 to N), where an entry includes tag information, carried by the forward packet, and the ingress port identifier (e.g., port number) of the router that received the forward packet. After storing the tag field and the ingress port into an empty entry, the index of the entry (e.g., entries 0 to N) is stored in the tag field of the forward packet before egress.

A forward packet received by the router can include a tag field. Based on receipt of the forward packet, router 200 (FIG. 2) that receives the forward packet can replace content of the received tag field with a local tag. Before making the substitution, router 200 can store the received tag value along with the input port into an entry in the breadcrumb table. The index of this entry is the local tag, which points to the previous received tag and the input port. The local tag can enable the identification of backward packets corresponding to forward packets at the initiator of the forward packets and aid in determining the output port for the backward packets on the return path as the input port identifier can refer to an output port from which to forward the backward packet. The local tag can facilitate delivery of backward packets to their respective sender(s).

A backward packet can include a tag field. At router 200, the packet's tag in the tag field can be used to retrieve the output port and the downstream tag from the breadcrumb table that was generated in the forward phase. Router 200 can substitute content of the received tag with a current tag of the packet, stored in a retrieved entry in the breadcrumb table, before forwarding the backward packet to another network device. The recorded input port can be used to identify the output port for the backward packet when the input port is bidirectional and receives packets from a network device and can also be used as an output port to transmit packets to a network device that was formerly upstream, but becomes a downstream device for the backward packet.

In some examples, a processor-executed driver, administrator, or orchestrator can configure a network interface device to include routing field in forward packets but not include the routing field in backward response packets.

A number of entries in the breadcrumb table can be based on a number of packets that can be stored in input buffers of router 200. In some examples, a number of entries in a breadcrumb table can be a number of entries for backward virtual channel (VC).

In some examples, if the breadcrumb table is full, there is no space in the input buffer at which the corresponding backward packet will be placed and router 200 can drop the forward packet and send a NACK to the packet sender. In some examples, router 200 can send NACK to other senders that send packets to congested next hop intermediate router so that those senders do not send packets to that congested next hop intermediate router.

Router 200 can reserve space in a buffer for backward responses to forward packets. Router 200 can track utilization of the buffer for backward responses (e.g., ACK and/or data or read request or write request). If the buffer for backward responses is full, then router 200 can drop a forward packet and send a NACK to an initiator. After receiving a response (e.g., ACK) from endpoint receiver in a backward response packet, router 200 can clear breadcrumb table entry and permit the entry to be reused.

When a downstream link is faulty (e.g., the network interface device is malfunctioning) or congested or a media is inoperative or disabled (e.g., wire is cut or physically damaged, wireless connectivity is disrupted by interfering objects), router 200 can flush the breadcrumb table (associated with the faulty link) by generating a NACK per entry of the breadcrumb table and send it to the output port extracted from the table for transmission to an initiator sender. This NACK can be considered as a faulty NACK and can set the fault tables on the way to the sender. Flushing the table can include clearing entries in the table and allowing the entries to be used for other links.

The NACKs can include information about the location of faulty link. Based on the initiator receiving a NACK which includes the fault location when the response encounters a faulty link, the initiator can act accordingly (e.g., reduce transmit rate of packets to the faulty link, change path to the destination to avoid the faulty link, invalidate paths containing the faulty link, or others).

In some examples, the NACK can include flow priority level of packet that was not received or dropped. Based on the priority level being above at or a priority level, a source transmitter can change a path of a packet to be re-transmitted and other forward packets (and corresponding backwards packets).

The usage of the breadcrumb table per link pairings of ports of network interface devices can provide: 1) upon occurring a fault connected to a link, inform one or more senders on the fault occurring so that they can update associated routing tables and resend requests (e.g., forward packets) over another path and/or 2) route ACKs/NACKs using the information stored in the breadcrumb table, e.g., the appropriate output port, so the entire routing path is not needed in the headers of the backward packets. In some examples, a network interface device does not include routing circuitry (e.g., routing tables and arithmetic logic unit (ALU)) for either forward or backward phases, which can reduce circuitry utilized and/or reduce power consumed.

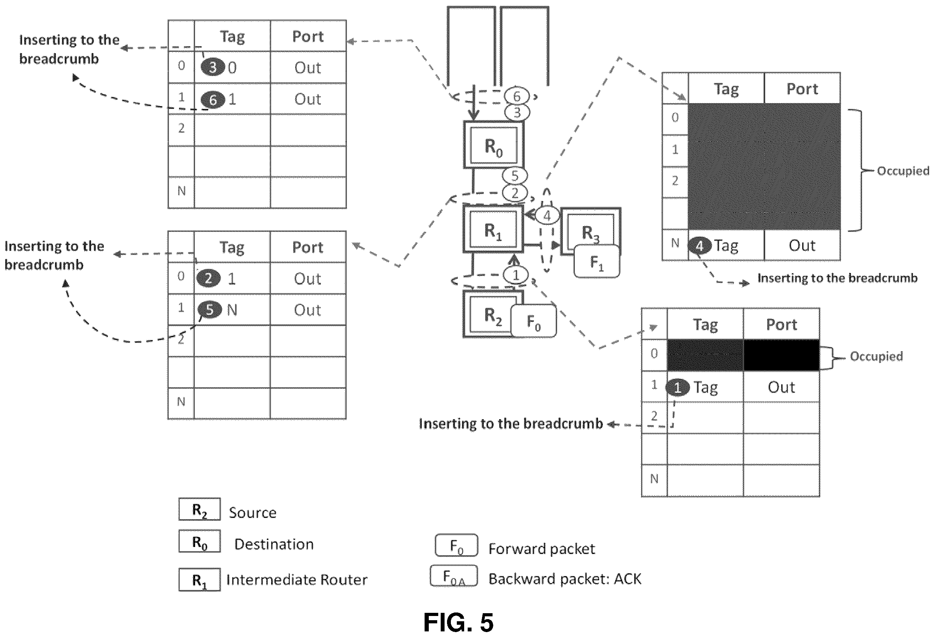

FIG. 5 depicts an example of setting a values in breadcrumb tables associated with different routers. Router R₂ receives a Forward packet (F₀) whose destination is R₀. Router R₂ reads the proper output port from the routing field of the packet (F₀) and inserts the used ingress port and the tag field value into a free breadcrumb entry, index 1. Router R₂ then stores the used index into the tag field of the packet header. At (1), router R₂ sends the packet over the output port. Upon arrival of the packet in router R₁, router R₁ records the tag field with value of 1 and the used ingress port identifier into an entry for index 0, e.g., a new tag of a breadcrumb table. Router R₁ stores the index 0 into the tag field of the forward packet as a new tag value and, at (2), sends the packet toward the destination by reading from the routing field of the forward packet. Upon arrival of the packet in router R₀, router R₀ records the tag field with a value of 0, and the used ingress port identifier into the index 0, e.g., a new tag of a breadcrumb table. Receipt of the forward packet by the router R₀ sets the corresponding breadcrumb table while ejecting the packet at (3) to a host system or another router.

A similar scenario occurs for F₁ whose sender and destination are R₃, and R₀. R₃ records the forward packet tag and the used ingress port by the packet into an empty breadcrumb entry, e.g., index number N, and then dispatches the packet to the port determined by the routing field at (4). Router R₁ stores tag field with value of N into a free breadcrumb entry (index 1), updates the tag field with the used index, and sends the forward packet over the output port read from the routing field at (5). Receipt of the forward packet from R₁ by the router R₀ sets the corresponding breadcrumb entry while ejecting the packet at (6).

In a backward phase, routers extract information (e.g., the output port and the previous tag) from the corresponding breadcrumb table entry using the tag carried by a backward packet. The tag carried by the backward packet refers to the tag used by the downstream router so that it can locate the relevant entry in its breadcrumb table. The routers replace the tags in the backward packets with the stored tag in the breadcrumb tables and forward the backward packets through output ports until the backward packets reach the corresponding sender, completing the transaction.

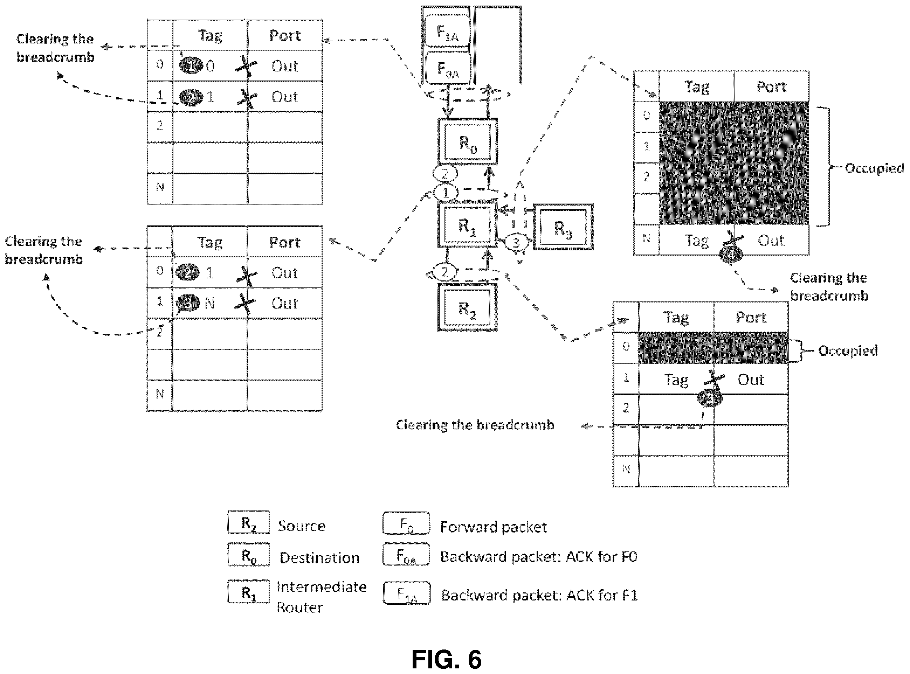

FIG. 6 demonstrates an example of clearing the breadcrumb tables which were set in FIG. 5, based on receipt of backward packets. As shown, router R₀ has generated the Backward packets. The router R₀ locates the proper entry of the breadcrumb table (e.g., index 0 and index 1) by accessing the tag field of the backward packets. Then R₀ extracts the proper output port from the entries of the table to route back the backward packets, and inserts the stored tag, known for the downstream router (e.g., tags 0 and 1), into the tag fields of the backwards packets. Next, the router R₀ clears the breadcrumb entries 0 and 1 and sends the backwards packets over the extracted output port at (1) and (2). Note that the entry is cleared whether the Backward packet carries ACK or NACK or other information, such as data.

Similarly, for the backwards packets, R₁ retrieves the appropriate output port by accessing the tag fields (e.g., indices 0 and 1) and overwrites the tag fields with tag field values (1 and N) in the breadcrumb tables. After that, R₁ clears the breadcrumb entries for indices 0 and 1 and sends the backward packet over the retrieved output ports at (2) and (3). When the sender, R₂, receives the packet, R₂ ejects the packet to the corresponding ejection buffer after replacing the tag and extracting the output port, e.g., the ejection port (e.g., egress port). This scenario continues until backward packets have routed back by accessing to the breadcrumb table and extracting the necessary information, the output port and tag.

When a fault occurs on the backward phase, senders will not be informed about the faulty link and the reason for the backward packets not arriving. Senders may transmit other packets over a path which contains the faulty link, imposing delays to the network. However, as routers can track the traversed forward packets at links into the breadcrumb tables, the router can inform the senders of the faulty link and its position by flushing the corresponding breadcrumb table and sending NACKs towards the initiator of those forward packets. Thus, the senders can reselect another path and update their routing table by invalidating the paths including the faulty link.

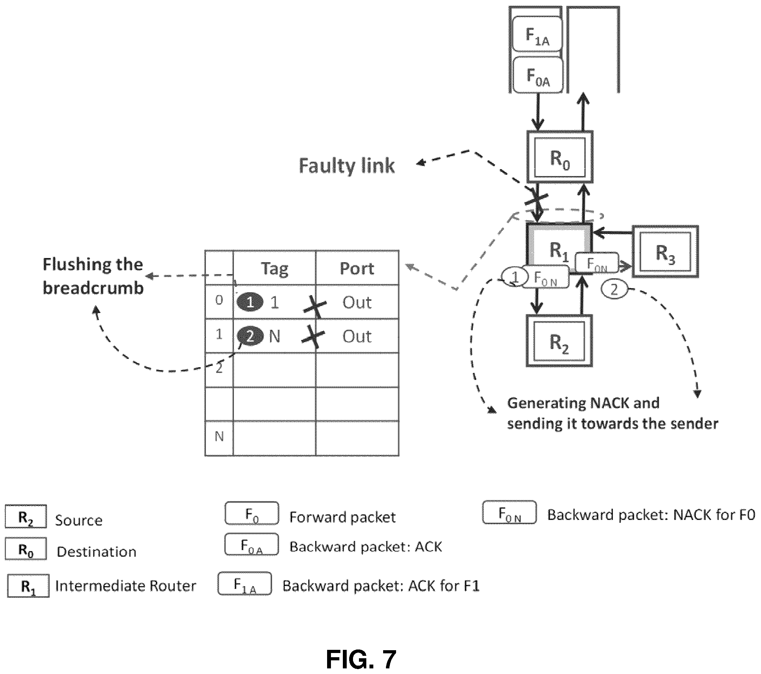

FIG. 7 illustrates a scenario in which a faulty link connecting R₀ and R₁ blocks the backward packets, F₀ and F₁, from making progress to R₁. In such scenario, the downstream router, R₁, flushes a breadcrumb table, corresponding to the faulty link, and sends NACKs towards the senders using the information stored in the table. Note that the NACKs can contain the drop location by indicating the distance of the router, corresponding to the faulty link, from the source router that is determined by the current hop number field of the forward packet header. NACKs may also contain additional information by providing a problematic port ID and problematic router ID. Receipt of the NACKs by the senders can enable them to update their routing table and reselect another path not only for retransmitting the forward packets corresponding to the NACKs but also for other forward packets.

### FAULT PREDICTION

In a network that utilizes source-routing, whereby a sender specifies output ports that routers are to use to forward a forward packet, the forward packet may encounter a faulty link on its way to the destination. As described herein, the router can generate and send a NACK to the sender. The NACK contains information about the faulty link and the drop location (e.g., hop number from a sender or destination IP address). The sender can invalidate the paths that include the faulty link and re-send the dropped forward packet using a new path that avoids the faulty link. In some cases, other routers in the network are not aware of the fault location and identify the fault location when they send a packet that includes the faulty link and receive a NACK. The packets are dropped only when they reach the faulty link, which can cause significant latency.

In some examples, a router can selectively drop packets based on priority of the packet or an associated flow of the packet according to a service level agreement (SLA). For example, the router can be configured to not proactively drop packets and forward packets based on a sufficiently high priority level of the packets or being associated with a particular flow.

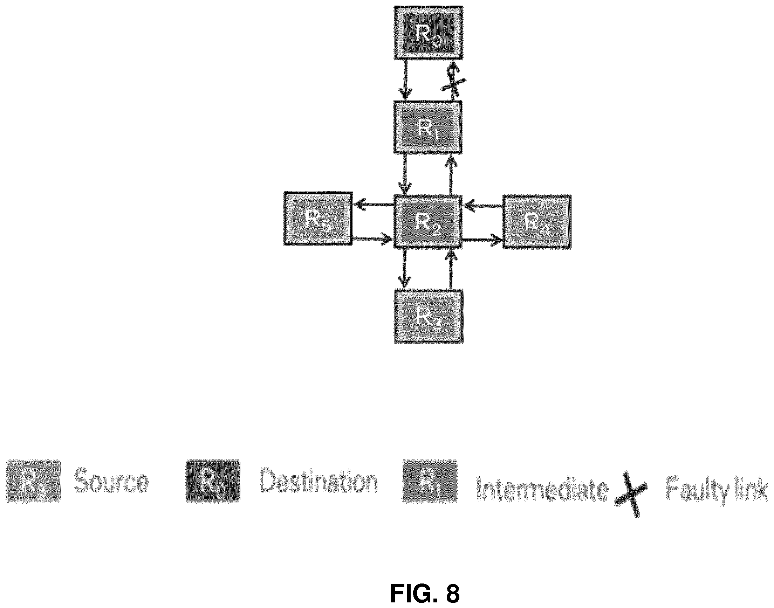

FIG. 8 depicts an example in which router R₃ (e.g., router 200) sends a packet to R₀, but the packet is dropped when it reaches R₁ due to the faulty link with R₀ (e.g., router 200), and R₁ (e.g., router 200) sends a NACK to R₃ (e.g., router 200). After that, R₄ transmits a packet destined for R₀, but such packet is dropped and R₁ sends a NACK to R₄. The same scenario repeats when R₅ transmits a packet intended for R₀.

In some examples, router R₂ can include circuitry to record or determine the fault location so that router R₂ can drop the packets earlier, before they reach the faulty link, and reduce latency from packet drops and re-transmissions. For example, R₂ can drop packets from R₄ and R₅ based on R₂ recording the fault location when it forwarded the first NACK destined for R₃.

In some examples, a router (e.g., router 200 of FIG. 2) can determine whether an incoming packet will collide with a faulty link, so that the router can drop the packet one or multiple hops before reaching the faulty link. The router can identify the faulty link based on received NACKs that identify faulty links along the incoming packet's path so that the router can drop the packets one or more hops before reaching the faulty links. The NACK can include details such as the drop location (e.g., hop number from a sender or destination IP address) and the reason for dropping (in this instance, a fault occurring). The router can extract the fault location from the NACKs that are generated due to a fault and traverse the network. Using the fault location, the router can extract a MASK that identifies the path from the router to the faulty link. The MASK and the path can be then stored in a table (e.g., fault table), which determines whether the incoming packets encounter the faulty link. Based on the MASK and the path, if the router determines that an incoming packet is to reach the faulty link, which is located one or multiple hops away, the router can drop the incoming packet and send a NACK to the sender even if the downstream router with a faulty link has enough buffer space to store the incoming packet.

A fault table can be utilized per pair link, and store the faulty path and the used MASK in the corresponding fault table as shown in Table 1. Upon receiving a forward packet, a router can perform a bit-wise AND operation between the routing information of the packet and the MASK stored in the fault table. If the outcome of the bit-wise AND is equal to the corresponding faulty path, then the router can determine that the incoming forward packet will encounter a faulty link and drop the packet multiple hops before it reaches the faulty link or router, saving power and latency.

**Table 1: Fault table.**

| | |
|---|---|
| Faulty path routing information | MASK |
| | |

If the fault table is full and a router receives a new fault NACK that does not exist in the fault table, a new entry cannot be added. Consequently, when a forward packet arrives that will face the new faulty link, the router will not have a record of the faulty link. In such cases, the router can forward such packets and the packets will be rejected either at the router connected to the faulty link or by another intermediate router. Intermediate routers that the NACK traverses can store a location of the faulty link, such as routers R2 and R1 in FIG. 8.

Accordingly, routers can predict faulty links along a packet's path by using the NACKs that are generated due to a fault and traverse the network. Thus, the routers can drop packets, that face the faulty link on their path one or multiple hops before they reach the faulty link, saving latency. Fault location can be independent of topology types and can apply to regular and irregular topologies and networks with any diameter.

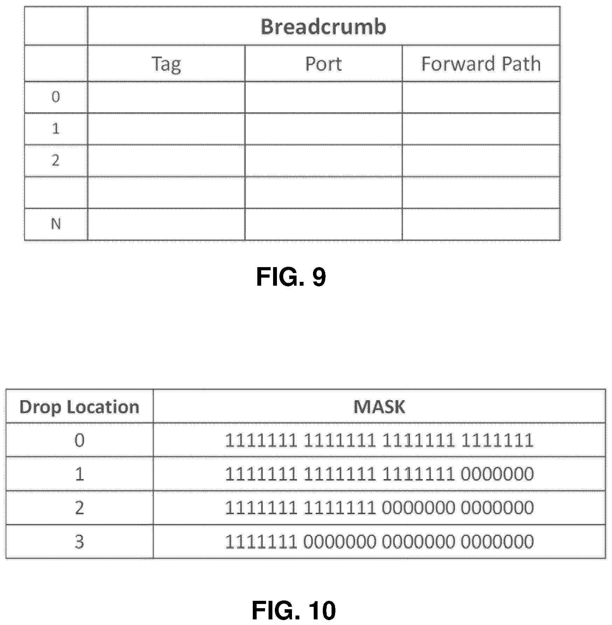

FIG. 9 depicts an example breadcrumb table. The table can include N + 1 entries and an entry can include tag information, carried by the forward packet, the input port of the forward packet, and the routing information from a current router to the destination, carried by the forward packet. A breadcrumb table can be utilized per link pair. For an outgoing forward packet, the router can record the incoming port, the local tag used at the upstream router (which is stored in the packet header), and the routing information from current router to the destination in the breadcrumb table. The index that points to this entry is called the local tag. As described earlier, the router replaces the local tag in the packet with the index value in the packet header. The incoming port is used to route back the response of the forward packet, e.g., the backward packet, towards the initiator of the forward packet. The router can replace the local tag in the backward packet with the stored tag in the table, which is a known tag for the downstream router, so that the downstream router can extract the corresponding entry of its breadcrumb table.

The routing information can be used by a router to determine the path from the intermediate router to the drop location upon receiving a NACK due to a faulty link in the intermediate routers. The routing information for a forward packet from the current router to the destination router can be stored in a corresponding breadcrumb entry. The routing information of the dropped forward packet can be accessed when the intermediate router receives the NACK based on the stored routing information from the dropped forward packet. A drop location can be determined by embedding the hop number in the forward packet header to help identify where the packet was dropped and which output port was faulty. As a forward packet traverses a router, the router can increment the hop number in the hop field. Routers can update the hop number field at each hop and the hop number field value can reveal the drop location of the packet. When a router drops a forward packet due to a faulty output port, the hop field of the forward packet can be copied into the backward packet's hop field, in some examples.

A route from an intermediate router to the drop location can be traced by using a MASK table to determine the path from the intermediate router to the drop location without using circuitry per input port (e.g., a route computation unit). Upon receiving a NACK, at least one intermediate router can identify the drop location by accessing a value of the hop field. To determine the exact path from the intermediate router to the drop location of the dropped forward packet, the router can utilize a MASK table with 2 _{*} D entries can be utilized, where D is the network diameter and 2 comes from valiant routing as a packet reaches its destination in 2 _{*} D hops at most.

FIG. 10 depicts a MASK table for a 2-diameter network with 128-radix routers. Other formats and sizes of masks can be used for different diameter networks and different radix routers. For routers with 128 ports, 7 bits can represent an output port. A drop location can have a corresponding MASK and the MASK length can be based on a size of the routing field in the packet header. Upon receipt of a NACK, generated due to a faulty link, a router (e.g., router 200) can perform a bit-wise AND between the corresponding mask and the routing information stored in a breadcrumb table to determine an exact path from the current router to the router connected to the faulty output link, called faulty path. Accordingly, a router can predict faulty links in the intermediate routers and drop packets one or multiple hops before reaching the faulty links.

### RESERVATION POLICY FOR BACKWARD MESSAGES

A network on chip (NoC) design can provide a cornerstone of correctness by being free of deadlock. For an interconnection network, correctness can include a guarantee of delivery of a transmitted packet to a destination receiver. An interconnect design ensures correctness by preventing deadlock, which occurs when a group of agents that share some resources remain in a perpetual waiting state due to a circular dependency. In an interconnect of a large-scale system, the agents are packets, and the resources are buffers that store incoming packets as they traverse the network to reach the destinations. The interconnection network can experience routing-level deadlock in which packets cease to progress and cause the system to malfunction. To achieve deadlock-free communication, some trade-offs are involved, such as virtual channels, performance issues and/or hardware complexity.

A routing-level deadlock arises when in a circular dependency chain, multiple packets are held in buffers while waiting for other held buffers to become free. Since packets do not release the buffers that they are occupying, they will wait indefinitely forming a routing-level deadlock.
To avoid the routing level-deadlocks, virtual channels (VCs) can be utilized. To this end, multiple VCs per message type can be used to ensure routing-level deadlock freedom. The number of needed VCs to provide correctness can be based on factors such as topology and routing scheme. Unfortunately, VCs are limited and expensive resources as their implementations require a large number of flipflops or static random access memory (SRAM), utilizing power and resources.

A router (e.g., router 200) can send NACKs to a sender of forward packets when the router drops the forward packets due to at least: forward packets cannot make progress to the next hop due to insufficient credit in F_{VN} or a fault or flow control cannot reserve the required buffer slots for the corresponding backward packet due to insufficient buffer space in B_{VN} over the return path.

Where buffers slots are reserved in a return path for backward packets, backward packets including NACKs/ACKs, can reach the corresponding senders. When a router sends a backward packet, the router can tear down a reserved path (e.g., reserve buffer slots can be released), freeing up the reserved buffer slots at the router.

In some examples, a router can utilize a buffer reservation policy and dropping technology which can enable routing-level deadlock freedom without using any VCs. A VC can represent a queue where packets can reside. Examples provide a flow control and avoidance of routing-level deadlock without using additional VCs per virtual network (VN). A VN can include a set of VCs, where VCs are reserved for isolation of messages to provide isolation among VCs. VCs can be used to construct orthogonal virtual networks which share the data path of a given router but have orthogonal storage. Examples can adopt a reservation policy and a dropping mechanism to attempt make routing-level deadlock freedom more likely to occur.

Head-of-line (HoL) blocking occurs if there is a single queue of data packets waiting to be transmitted, and the packet at the head of the queue (line) cannot move forward due to congestion, even if other packets behind this one could. A router can discard the blocked forward packets and pre-allocate the buffer slots to the backward packets beforehand, which can significantly alleviate the head-of-line blocking and enhance throughput. Examples can be agnostic to the topology types and can handle regular and irregular topologies and networks with any diameter.

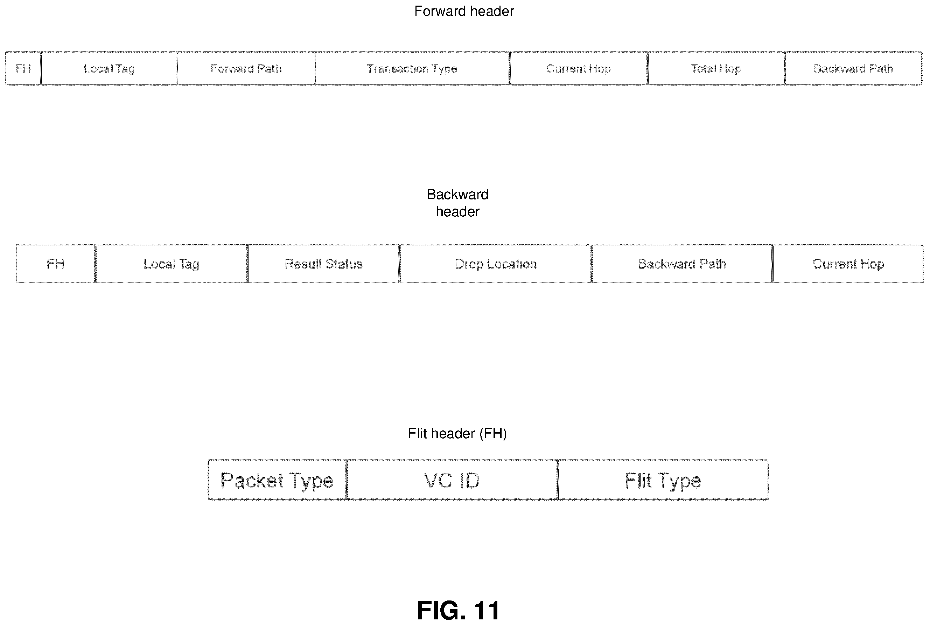

FIG. 11 depicts an example of a forward packet header. A forward packet header can include one or more of the following fields.

| Field | Example description |
|---|---|
| Flit header (FH) | Identifies packet type, virtual channel identifier, and flit position. |
| Local tag | Router assigned tag |
| Forward path | The output ports per hop from the source to destination. |
| Transaction Type | Read, Write, ACK, NACK etc. |
| Current Hop | A pointer to the Forward path field. Router determines the appropriate output port number based on current hop. After reading Current Hop field, router increments the hop count by one. |
| Total hop | Number of hops between source and destination. |
| Backward path | Routing path from the destination to source. Share the same routers with the Forward path. |

Examples can avoid having backward path and total hop fields in the forward header by use of the breadcrumb table. Moreover, a backward packet header may not include a backward path and the current hop fields.

A backward packet header can include one or more of the following fields.

| Field | Example description |
|---|---|
| Flit header (FH) | Identifies packet type, virtual channel identifier, and flit position. |
| Local tag | Router assigned tag |
| Result status | ACK/NACK, the reason of failure |
| Drop Location | Hop number field of the Forward packet, when dropped. |
| Backward Path | Copied from the Forward header. |
| Current Hop | The total hop number of the Forward packet header - the current hop number of the Forward packet header. |

A flit header can include one or more of the following fields.

| Field | Example description |
|---|---|
| Packet Type | Forward or Backward |
| VC ID | The virtual channel number the packet is using. |
| Flit type | Head, tail, body, head-tail |

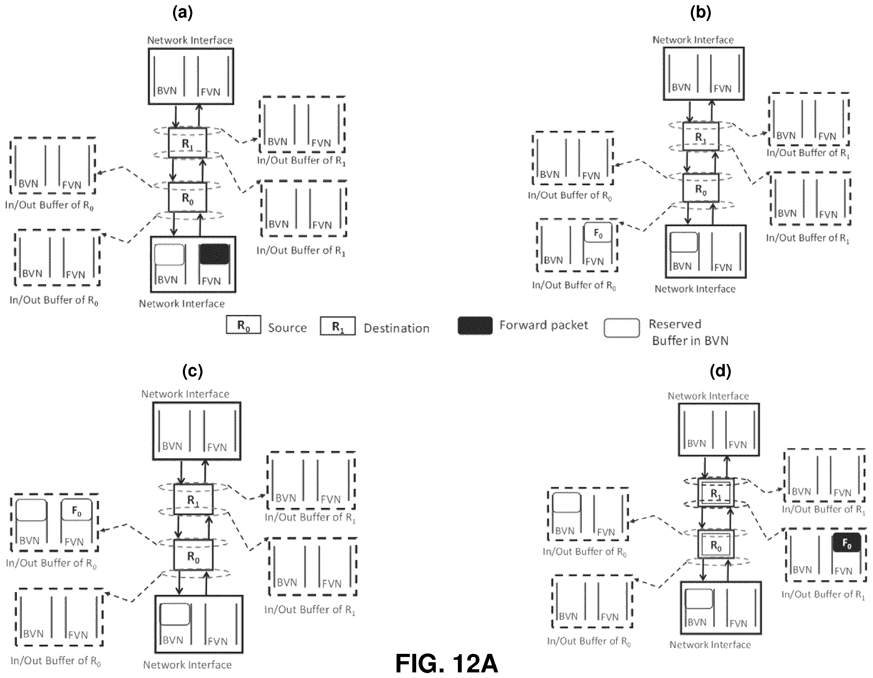

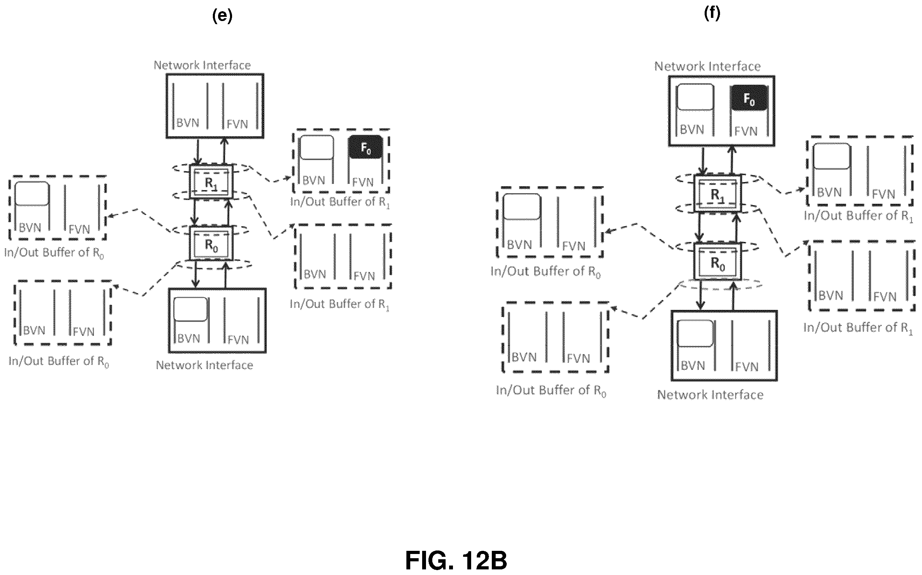

FIGs. 12A-12B depict an example of reserving buffer slots while forward packet traverse the routers. For the sake of simplicity, only the buffers for one direction are represented, but can be applied in other directions (e.g., east-west, west-east, or south-north). As shown in (a), when forward packet F₀ is placed into the injection queue of the R₀, buffer space is reserved for the future backward packet in the respective backward ejection queue. At (b), once forward packet F₀ resides in the forward input buffer R₀, router R₀ checks the conditions for advancing forward packets. Since the forward downstream buffer of R₀ has enough space and its corresponding backward input buffer is available, the forward packet advances and at (c), the required buffer in the BVN slot is reserved for the future backward packet. After that, packet F₀ proceeds to the forward input buffer of the next hop in (d). Then, at (e), packet F₀ advances to the forward downstream buffer since it has enough room, and its corresponding backward input buffer can accommodate the future backward packet. Thus, R₁ proactively reserves a backward buffer slot is proactively reserved while the packet traverses to the output stage. As the packet has arrived at its destination, it gets ejected to the FVN while a room is reserved in the BVN of the network interface (NI) to accommodate the future Backward packet at (f).

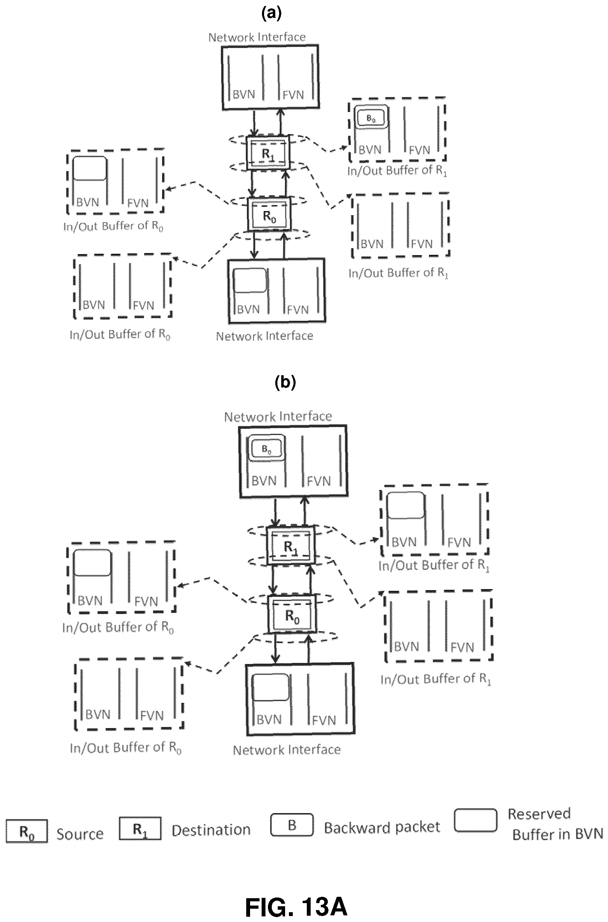

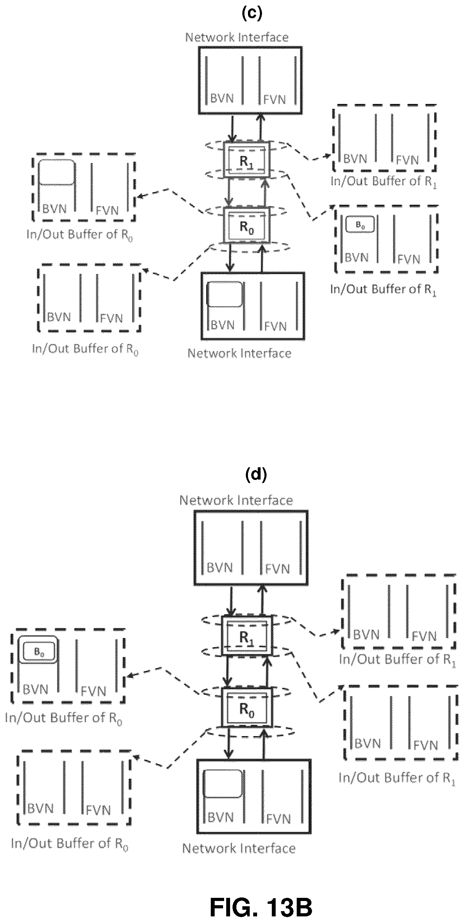

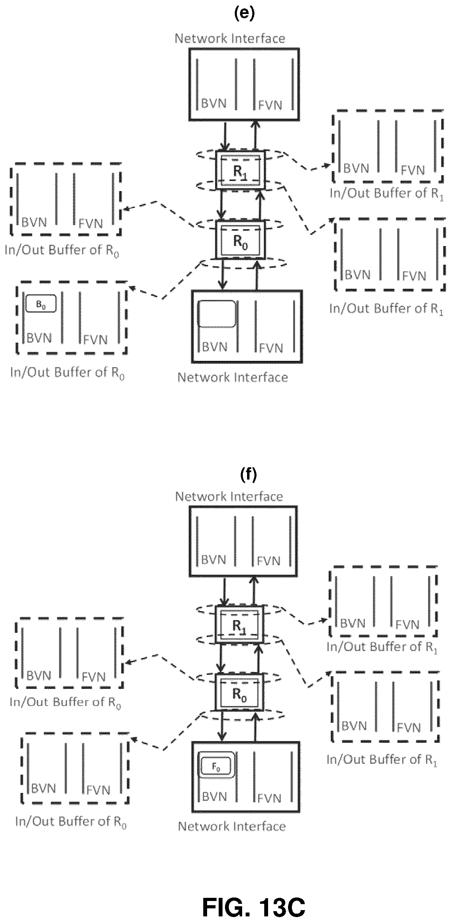

FIGs. 13A-13C demonstrate generating the backward response which uses the buffer slots reserved in FIGs. 12A-12B. As the backward response leaves the routers or NI, the pre-reserved buffer slots are released. Released buffer slots can be used to store backward packets. As shown, the backward response may not be blocked due to the lack of buffer space as buffer space is reserved to accommodate the backward response. Buffer slots can be released upon departure of the backward packet from a router.

In addition to use of buffer space reservation policy for backward packets and dropping of forward packets proactively before reaching a faulty link or when they cannot advance due to the lack of credit, or alternatively, a router can prioritize backward packets over forward packets so that backward packets always access to an output port in the switch allocation or enable separate virtual network (VN) for the forward and the backward packets. Hence backward packets may not be blocked from egress by forward packets indefinitely.

To ensure routing-level deadlock freedom, a router can be configured so that deadlock does not happen between forward and backward packets. If there is a dependency cycle between forward packets where no forward packet can make forward progress due to the cycle, e.g., routing-level deadlock, a router can drop those forward packets as a result of a policy.

In some examples, a router does not drop backward packets and can drop forward packets. A packet can include a flag (e.g., 1 bit) in packet header that indicates the packet is backward or forward type.

### HOTSPOT TABLE

Endpoint congestion occurs when an endpoint network interface device is unable to store or process incoming packets at a rate of packet receipt. Thus, endpoint congestion can cause packets to be buffered at the network interface or dropped when the buffer is full. Endpoint congestion also degrades the performance of other flows that travel through some of the routers within the congested flow. In other words, the endpoint congestion can spread to other parts of the network, causing tree saturation which can degrade throughput and tail latency by stalling the network for both the hotspot traffic and the unrelated traffic while the congestion remains in the network.

Unlike the network congestion, which can be solved by employing adaptive routing techniques, endpoint congestion may not be solved by changing the routing strategy, as it does not address limited processing capacity of the destination node.

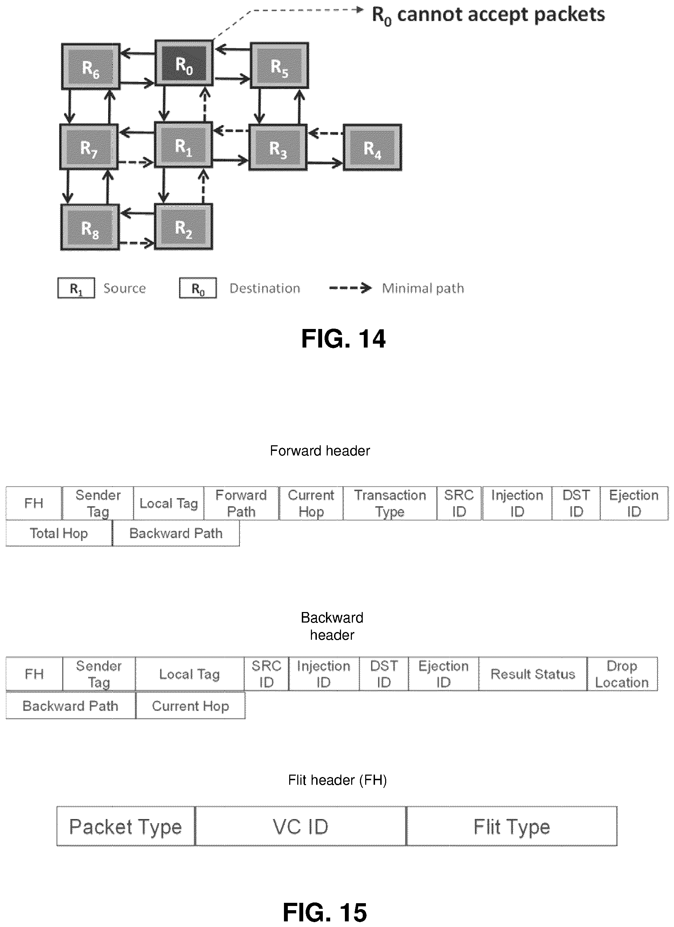

FIG. 14 demonstrates an endpoint congestion in which multiple senders send packets to R₀, but the endpoint of R₀ cannot receive any packets. Endpoint congestion can occur where routers R₁ - R₈ send packets to router R₀, but the endpoint connected to R₀ is unable to accept any packets due to insufficient buffer space, packet overflow, or insufficiently fast processing capability. As a result, packets destined for R₀ can be dropped when they reach the destination. If the senders can re-send the packets over non-minimal paths before the congestion gets cleared, they spread the congestion to the non-affected parts of the network, enlarging the saturation tree.

Various examples can predict endpoint congestion in the network so that routers or switches can drop the packets intended for those congested destinations one or multiple hops before reaching the congested nodes. In some examples, a forward packet and its backward packet response can share a same router path. In other words, a backward packet traverses through the exact path that the forward packet has crossed over. In some examples, one or more intermediate routers can predict endpoint congestion based on receipt of drop indications (e.g., one or more NACKs). When a router receives an endpoint NACK at its input port, the router records the source and the destination of the forward packet corresponding to the NACK, so that one or more intermediate routers can drop packets targeted for the congested endpoints even when at least one downstream router has enough buffer space to store the packets. The router can mark the NACK as the hotspot setter and receipt of a corresponding ACK from the hotspot setter can unset the entry. Accordingly, a corresponding sender can re-transmit the corresponding forward packet over the same path as that of the dropped packet. A router can access a hotspot table, per pair link, to record the necessary information carried by the endpoint NACKs. The router can use the hotspot table to determine whether the router is to drop incoming packets because the incoming packets are sent to a congested endpoint. Upon receiving an ACK corresponding to the hotspot entry, the router can clear the hotspot entry, allowing packets intended for the destination to pass.

In some examples, a sender can indicate to one or more routers a reset occurred so the sender may not re-transmit a packet associated with a NACK as the sender is powered down or does not perform the re-transmission. Some examples of a router allow a subset of packets to be forwarded regardless of packet drop in same flow or to same destination until sender indicates drop is permitted or a timer expires.

In some examples, if a sender receive a NACK that indicates endpoint congestion, the sender can re-send a packet identified by the NACK using a same router path as that of the dropped or missing packet. In some examples, if a sender receive a NACK that indicates network congestion before the endpoint receiver, the sender can re-send a packet identified by the NACK using a same or different router path as that of the dropped or missing packet.

Accordingly, routers within the path between a source and the congested endpoint (destination) can drop forward packets intended for the congested destination, one or multiple hops before they reach the congested endpoint, saving latency. Upon dropping a forward packet based on matching criteria of an entry of the hotspot table, the intermediate router can generate a NACK equivalent to an endpoint NACK and send the NACK over the return path to the sender. Routers can propagate the congestion information, by sending NACKs ruled by the hotspot table, to other routers so that other routers can record the information into their hotspot tables and can drop forward packets destined for the congested endpoint and alleviate the pressure on the congested endpoint. Examples can be agnostic to the topology types such as regular and irregular topologies and independent of networks diameter.

FIG. 15 depicts an example of packet format of a forward header. Some examples can avoid having backward path and total hop fields in the forward header by use of the breadcrumb table. In this case, the backward header also does not need to have the backward path and the current hop fields.

| Field | Example description |
|---|---|
| Flit header (FH) | Identifies packet type, virtual channel identifier, and flit position. |
| Sender Tag | The local tag assigned by the sender. |
| Local tag | Router assigned tag |
| Forward path | The output ports per hop from the source to destination. |
| Current Hop | A pointer to the Forward path field. Router determines the appropriate output port number based on current hop. After reading Current Hop field, router increments the hop count by one. |
| Transaction Type | Read, Write, ACK, NACK etc. |
| Source ID | Specify the sender ID of the packet in this field. Thus the packet header can include the source ID and the injection port, which are needed for handling the endpoint congestion. |
| Injection ID | The injection port ID. |
| Destination ID | A router adds a field to the packet header that indicates the destination ID and the ejection port, for handling the endpoint congestion. |
| Ejection ID | The ejection port ID. Output port that is connected to network interface |
| Total hop | Number of hops between source and destination. |
| Backward path | Routing path from the DST to SRC. Share the same routers with the Forward path. |

A backward packet header can include one or more of the following fields.

| Field | Example description |
|---|---|
| Flit header (FH) | Identifies packet type, virtual channel identifier, and flit position. |
| Sender Tag | The local tag assigned by the sender. |
| Local tag | Router assigned tag |
| Source ID | Specify the sender ID of the packet in this field. Thus the packet header can include the source ID and the injection port, which are needed for handling the endpoint congestion. |
| Injection ID | The injection port ID. |
| Destination ID | A router adds a field to the packet header that indicates the destination ID and the ejection port, for handling the endpoint congestion. |
| Ejection ID | The ejection port ID. Output port that is connected to network interface. |
| Result status | ACK/NACK, the reason of failure. This field also can reveal if the NACK is to set an indicator of a hotspot. |
| Drop Location | Hop number field of the Forward packet, when dropped. |
| Backward path | Copied from forward header |
| Current Hop | The total hop number of the Forward packet header. The current hop number of the Forward packet header. |

A flit header can include one or more of the following fields.

| Field | Example description |
|---|---|
| Packet Type | Forward or Backward |
| VC ID | The virtual channel number the packet is using. |
| Flit type | Head, tail, body, head-tail |

Various routers (e.g., router 200) can allocate a hotspot table per pair link, so the input port and its corresponding output port share the table. The hotspot table can be used to handle endpoint congestions. The router can set and clear a hotspot entry during the backward phase when the backward packets reside in the input buffer. The router can search the hotspot table during a forward phase when the forward packets reside in the output buffer of the router. When a router receives an endpoint NACK at its input port, the router can record the source and the destination of the forward packet corresponding to the NACK. The router then can filter the packets with a different source but the same destination while packets are stored in its output buffer or prior to storage in the input buffer or output buffer. The NACK can be marked as a hotspot setter. The arrival of an endpoint NACK can activate the router to insert an entry to the corresponding hotspot table, which can enable the router to drop packets originating from different senders that are destined for the same destination at the router, where the destination has sent an endpoint NACK. The router can drop the packets one or multiple hops before the packets would reach the congested endpoint. When an entry for a congested destination is set, other endpoint NACKs with the same destination, whether its source differs from the source recorded in the entry or not, need not be recorded as the endpoint congestion has already been recorded for that destination. An entry of the hotspot table can be cleared when the ACK corresponding to the entry arrives on the backward phase, as it indicates that the endpoint is not congested anymore.

Table 3 depicts an example hotspot table which each entry contains the destination ID, where an endpoint congestion has occurred, the source ID, where forward packets are generated, and a timestamp which initially is zero. The timestamp can be a counter that determines the age of the entry by incrementing at each cycle, and its limit is determined by several factors such as topology, round trip delay, etc. When the timestamp of an entry reaches its limit, the router can clear the hotspot entry. Therefore, the hotspot entry can be cleared when either the router receives an ACK corresponding to the entry, or the timestamp of the entry reaches its limit. In other examples, a countdown timer can be utilized that counts down to zero and causes the entry to expire at or after reaching the zero value.

**Table 3: Hotspot table**

| | | | |
|---|---|---|---|
| DEST ID (e.g., router ID + ejection port (output port that is connected to network interface)) | SOURCE (e.g., router ID + injection port (ingress port from network)) | Timestamp | Tag (e.g., global or local packet identifier) |
| | | | |
| | | | |

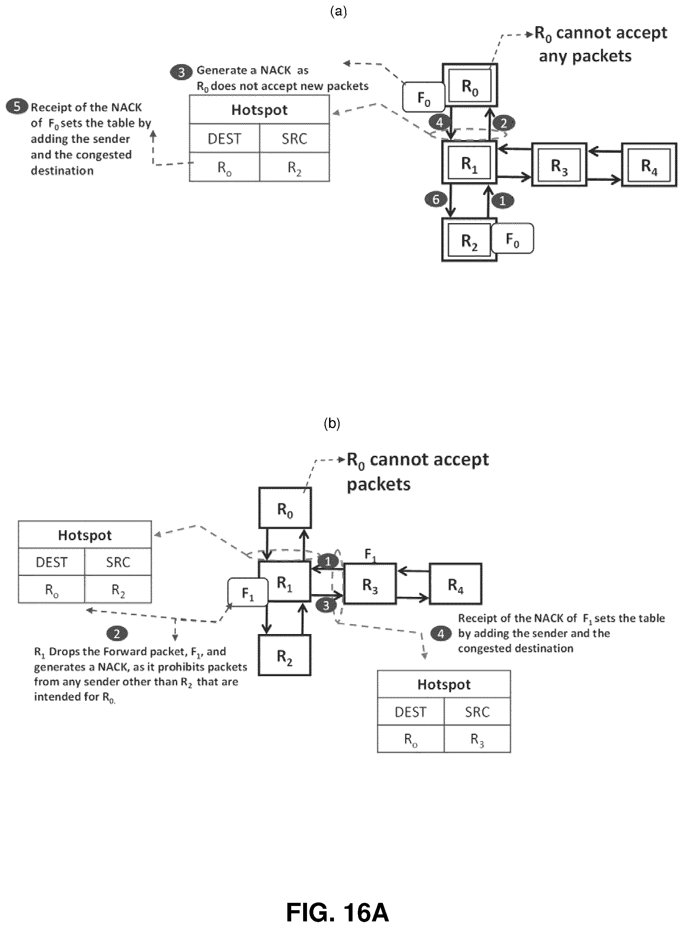

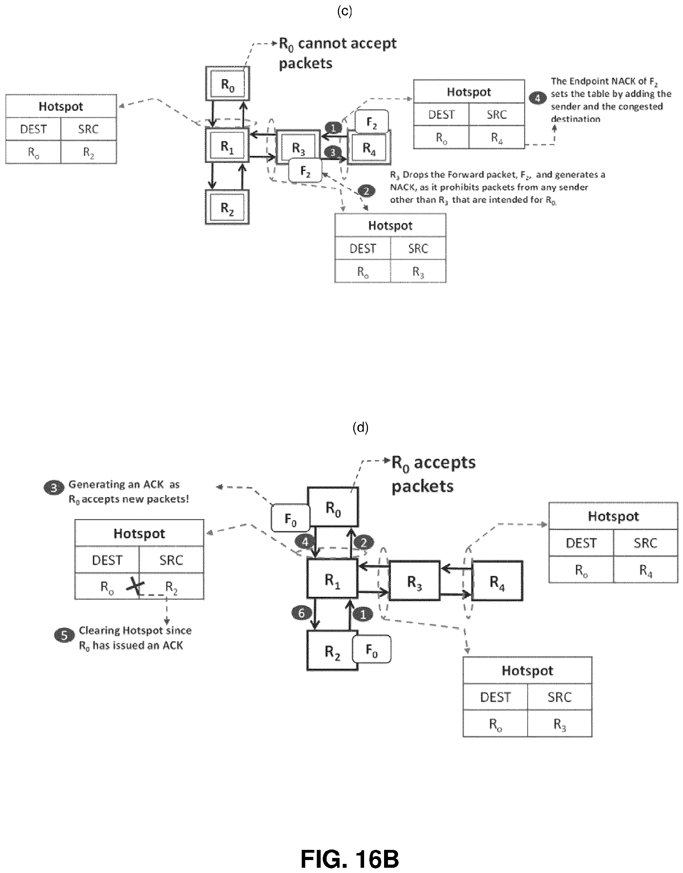

FIGs. 16A-16B illustrate a process for managing endpoint congestion at endpoint destination R₀ when multiple sources are transmitting forward packets to R₀. Setting and clearing the hotspot table can be as follows. R₂ sends a forward packet to R₀, but as R₀ cannot receive any other packets, R₀ drops the packet and generates an endpoint NACK. R₁, as an intermediate router, records the endpoint congestion into the hotspot table. As a result, R₁ drops packets from any sender other than R₂ that are intended for R₀. R₂ retries until R₀ accepts the packet which leads to clearing the hotspot entry R₁ when it receives the corresponding ACK, paving the way for the packets of R₃, and then R₄.

As depicted, R₂ attempts to send a forward packet to R₀, but R₀ is unable to receive any packets and thus discards the packet and generates an endpoint NACK that is forwarded to the sender, R2. Routers that receive the NACK can store the source and destination information carried by the NACK in its hotspot table. Use of the hotspot table enables the routers to reduce the pressure on the congested endpoint by dropping the packets from any other source than the one recorded in the hotspot table that are destined for the same destination. When these routers receive an ACK corresponding to the hotspot, the routers can clear the entry and allow other packets destined for the same destination to pass.

It is possible for a hotspot table to be full. In a worst-case scenario, a router receives a new endpoint NACK that does not exist in the hotspot table. If the corresponding hotspot table is full, a new entry cannot be added. Consequently, when other forward packets with a different sender but the same destination arrive, the router may not have a record of this endpoint's congestion. In such cases, the router can forward the packets. These packets might then be rejected either at the destination or by another intermediate router according to an associated hotspot table. Nonetheless, in the worst-case scenario, the network's correctness remains unaffected.

A router may not receive a corresponding ACK, for example, due to a fault, so the router will not be informed on clearing the endpoint congestion at the destination. However, since a timestamp is associated with each entry of the hotspot table, the router can clear the entry when the counter reaches its limit.

If a router simultaneously receives an endpoint NACK/ACK and a forward packet intended for the same destination, the router can set/clear the hotspot table by the endpoint NACK/ACK, and then check if the forward packet's destination exists in the table to reduce unwanted traversals /drops.

After the sender receives the endpoint NACK, the sender can perform following actions: stop injecting any forward packets that are intended for the congested destination and only re-send the forward packet corresponding to the NACK, if the NACK is a hotspot setter, to the destination over the same path corresponding to the packet that triggered the NACK. If the sender has received multiple endpoint NACKs corresponding to a single destination, only one forward packet, the forward packet which has set the hotspot table, can be re-transmitted by a sender. To this end, the sender can record the corresponding congested destinations (e.g., destination IP address(es)) identified by the received hotspot setter NACKs into a table (e.g., congestion table). The congestion table can be used to track the identifiers (e.g., destination IP address, router ID, and/or the corresponding ejection port ID) experiencing endpoint congestion, and attempt to prevent a sender from sending new packets intended for the congested destination. Similar to the hotspot table, a configurable counter can be associated with an entry and the router can clear an entry either by receipt of the corresponding backward packet (ACK) or by expiration of an associated timer.

### IN-ORDER PACKET DELIVERY

In-order packet delivery guarantees that packets belonging to the same flow arrive at a destination in the same order as they were sent by the sender. The destination can include multiple endpoint network interface devices (e.g., ejection ports). In-order delivery of packets requires that request packets are delivered to protocol stack in a same sequence as they are transmitted.

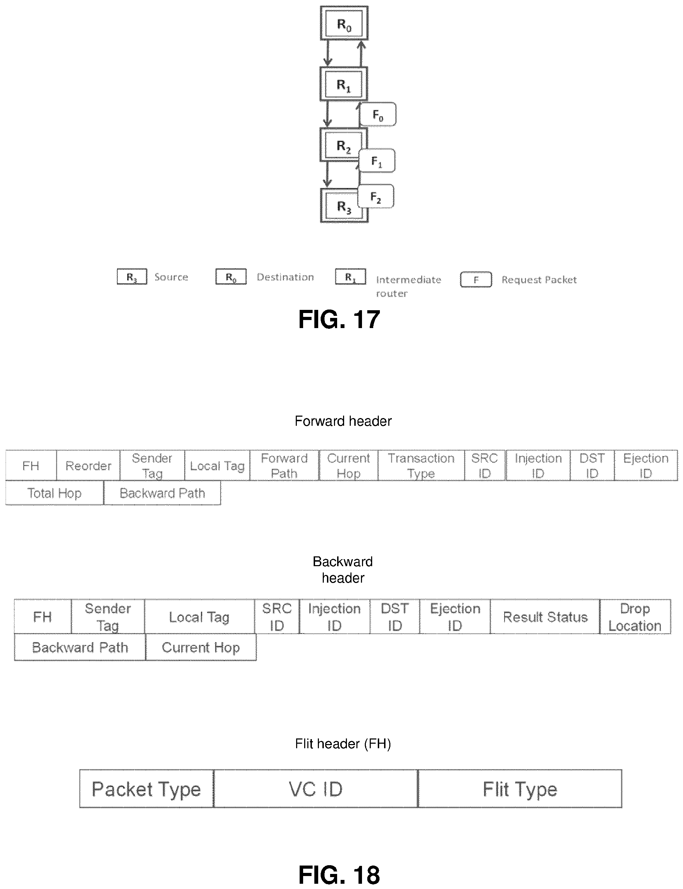

FIG. 17 demonstrates a scenario in which in-order packet delivery is violated even though a deterministic routing is employed. R₃ sends F₀, F₁, and F₂, in order, to R₀. When F₀ arrives R₁, it gets dropped due to a network congestion, and a NACK is sent back to R₃. However, when the subsequent packets arrive at R₁, the congestion has cleared and those packets pass through the router, violating in-order delivery. As a result, the destination will receive the packets in an out-of-order fashion, F₁, F₂, and F₀. A reorder buffer can be used at R₀ and the destination can assign a sequential serial number to each packet and store the packets that arrive out of sequence in a reorder buffer at the sink node until they receive all the preceding packets.

Examples provide for in-order packet delivery while using deterministic routing, even in the presence of packet dropping. Deterministic routing can involve assigning a fixed path for each pair of source and destination nodes, to prevent packet reordering. In some examples, a router (e.g., router 200) can utilize a tracking table (e.g., reorder table), for a link pair of routers. When a packet is dropped, the router can insert the source, destination, and the sender tag into the tracking table. Upon arrival of other forward request packets, forward request packets can pass the router if their senders and destinations do not match with an entry in the table. Otherwise, the router can drop those forward packets because a forward packet of the same flow had been dropped and an entry was created in the tracking table. When the first packet for which the entry was created arrives, the router forwards that packet and the entry is cleared.

Routers can utilize tracking tables called reorder tables. A reorder table can be allocated per link pair (e.g., an input port of a next hop router or network interface device and an output port of a current router or network interface device). If a forward packet in an input buffer of a router cannot proceed to a next hop (e.g., router or network interface device) due to network congestion, the router drops the packet and sends a NACK to the sender. For the NACK, if the reordering bit of the forward packet is enabled, the router can create an entry in the corresponding reorder table with the sender ID, destination ID, and the sender tag.

For a forward packet, the router can search the table to check if there is an entry with the same sender ID and destination ID. If such an entry exists, then the router can drop the packet if its sender tag differs from the one stored in the entry. If the sender tag matches, the dropped packet for which the entry was created has arrived, so the router can clear the entry and let the packet pass. This way, in-order packet delivery can be ensured using a deterministic routing in a transactional network when packets may get dropped.

The reorder table can accommodate N entries, where N is the number of nodes in the network. Thus, a sender can have only one entry in the table. Table 3 shows an example reorder table with N entries, each entry including the source ID, destination ID, the sender tag, and a timestamp which initially is zero. The IDs and the tag can be accessed from the Forward packet's header. The timestamp can be a counter that determines the age of the entry by incrementing at each cycle, and its limit is determined by several factors such as topology, diameter of the network, round trip delay, etc. When the timestamp of an entry reaches its limit, the router can clear the reorder entry. Therefore, the router can clear a reorder entry when either the router receives the packet for which the entry was set (assuming the congestion is gone), or the timestamp of the entry reaches its limit.

**Table 3: Reorder table; there is a reorder table per link pair**

| Source | Destination | Sender Tag | Timestamp |
|---|---|---|---|
| | | | |
| | | | |

After the sender receives the NACK for a packet of a flow, the sender may only re-send the forward packet corresponding to the NACK to the destination over the same path. The sender may not select another path for the retransmission of the forward packet and not send packets of a new flow over the same path that includes the router at which the forward packet was dropped and the entry was set.

In some examples, a sender can indicate to one or more routers a reset occurred so the sender may not re-transmit a packet associated with a NACK as the sender is powered down or does not perform the re-transmission. Some examples of a router allow a subset of packets to be forwarded regardless of packet drop in same flow or to same destination until sender indicates drop is permitted or a timer expires.

A reorder table may not reach full level because (1) it has a maximum capacity equal to the number of nodes in the network, and (2) after receiving a NACK, the sender can avoid sending packets of a new flow through the same path that includes the router where the forward packet was dropped and the entry was created. The reorder table at the intermediate router input port can hold up to N entries, where N is the number of nodes, so the router can create N - 1 entries for those packets. As a sender can have only one entry in the table, the table may never be full.

It is possible that a router will never receive a forward packet corresponding to an entry of a reorder table, for example, due to a fault. However, since a timestamp is associated with each entry of the reorder table, the router can clear the entry when the counter reaches its limit.

The routers may drop packets to ensure the in-order delivery even though the downstream router has enough space to accommodate them. This can occur when a packet of a flow gets dropped due to a network congestion. Subsequent packets can be dropped when they arrive at the router until the router receives the first dropped packet.

Various examples can guarantee in-order packet delivery when a deterministic routing is employed in a transactional network when packets may get dropped. Examples can be agnostic to the topology types and can handle regular and irregular topologies and networks with any diameter.

FIG. 18 depicts example packet formats. In some examples, a forward packet header can include one or more of the following fields:

| Field | Example description |
|---|---|
| FH | Flit header |
| Reorder | Indicates if the application protocol requires the packets to be delivered in-order. |
| Sender Tag | The local tag assigned by the sender. The packet header contains the sender's tag. This tag determines the sequence of packets of a flow generated by the sender node. |
| Local tag | Router assigned tag |
| Forward path | The output ports per hop from the source to destination. |
| Current Hop | A pointer to the Forward path field. Router determines the appropriate output port number based on current hop. After reading Current Hop field, router increments the hop count by one. |
| Transaction Type | Read, Write, ACK, NACK etc. |
| Source ID | Specify the sender ID of the packet in this field. Thus, the packet header is augmented with the source ID and the injection port. |
| Injection ID | The injection port ID. Ingress port from the network interface. |
| Destination ID | A router adds a field to the packet header that indicates the destination ID and the ejection port, for handling the endpoint congestion. |
| Ejection ID | The ejection port ID. Output port that is connected to network interface. |
| Total hop | Number of hops between source and destination. |
| Backward path | Copied from forward header. Routing path from the DST to SRC. Share the same routers with the Forward path. |

A backward header can include one or more of the following fields.

| Field | Example description |
|---|---|
| FH | Flit header |
| Sender Tag | The local tag assigned by the sender. The packet header contains the sender's tag. This tag determines the sequence of packets of a flow generated by the sender node. |
| Local tag | Router assigned tag |
| Source ID | Specify the sender ID of the packet in this field. Thus, the packet header is augmented with the source ID and the injection port. |
| Injection ID | The injection port ID. Ingress port from the network interface. |
| Destination ID | A router adds a field to the packet header that indicates the destination ID and the ejection port, for handling the endpoint congestion. |
| Ejection ID | The ejection port ID. Output port that is connected to a network interface. |
| Result status | ACK/NACK, the reason of failure |
| Drop Location | Hop number field of the Forward packet, when dropped. |
| Backward path | Copied from forward header. Routing path from the DST to SRC. Share the same routers with the Forward path. |
| Current Hop | The total hop number of the Forward packet header - the current hop number of the Forward packet header. |

A flit header can include one or more of the following fields.

| Field | Example description |
|---|---|
| Packet Type | Forward or Backward |
| VC ID | The virtual channel number the packet is using |
| Flit type | Head, tail, body, head-tail |

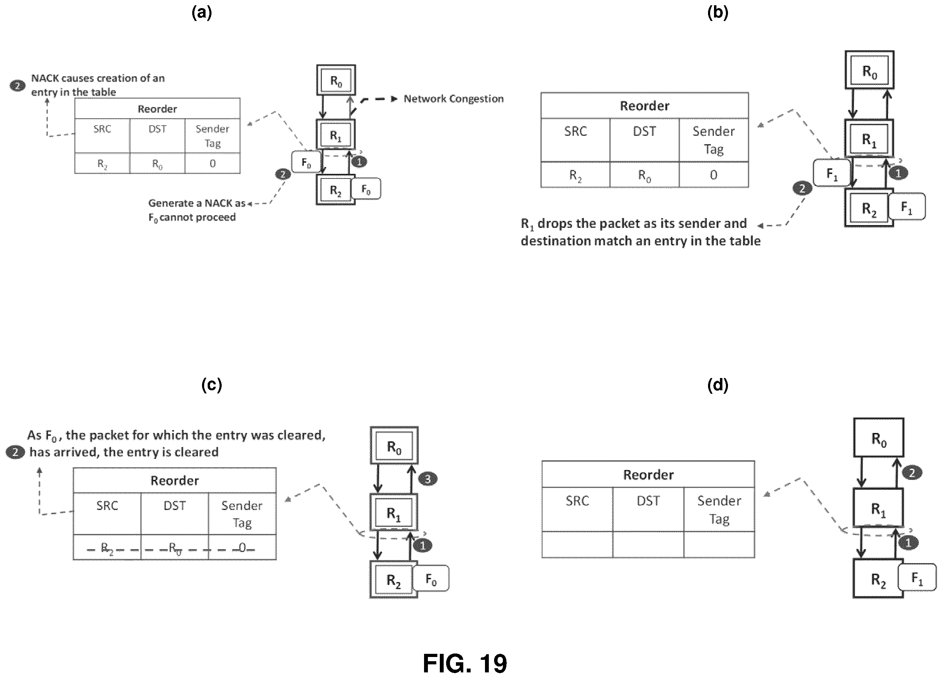

FIG. 19 depicts an example whereby a reorder table ensures in-order delivery with a walkthrough example. As shown, the sender, R₂, sends two forward packets (F₀ and F₁) to the destination, R₀. These forward packets are sent in-order to the destination. When the first packet, F₀, arrives at the intermediate router, R₁, at (a), the router drops the packet F₀ due to the network congestion. The router, R₁, generates a NACK and sends the NACK to the sender. In connection with generation and sending of the NACK, the router creates an entry in the reorder table with the source ID, destination ID, and the sender tag.

When the second forward packet, F₁, arrives at the input buffer of R₁ at (b), the congestion has cleared. However, since the packet matches an entry in the table but is not the setter of the entry, R₁ drops the packet and sends a NACK to the sender. R₁ keeps dropping received forward packets that match an entry in the table until R₁ receives the setter of that entry, e.g., F₀. When F₀ arrives at R₁, R₁ clears the entry. This way, R₁ can provide that the destination nodes receive the packets in the same order that they were sent by the senders.

Various examples can potentially guarantee in-order packet delivery when a deterministic routing is employed in a transactional network when packets may get dropped. Examples can be agnostic to the topology types and can handle regular and irregular topologies and networks with any diameter.

### EXAMPLE PROCESS

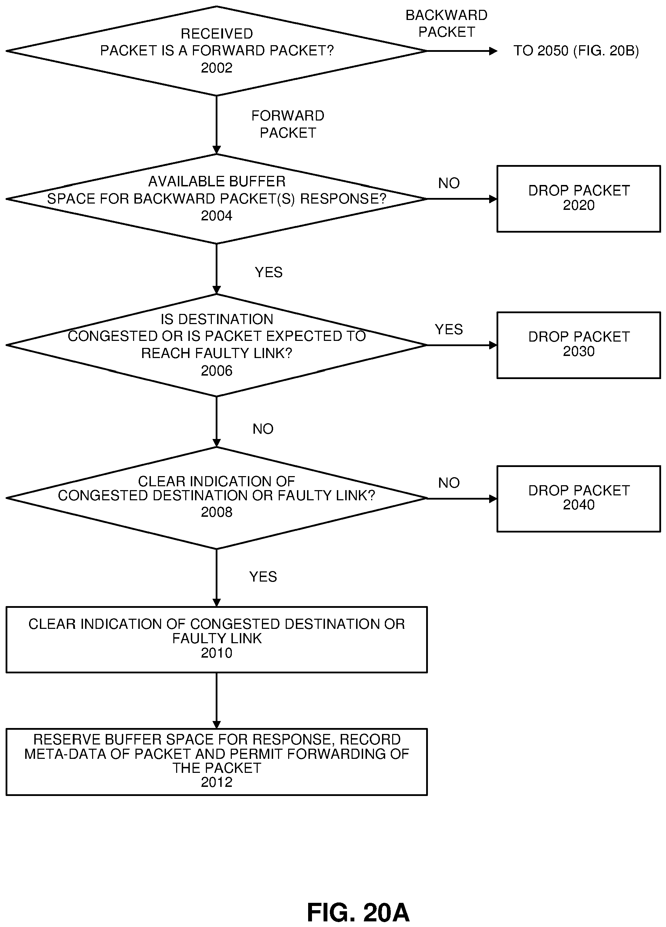

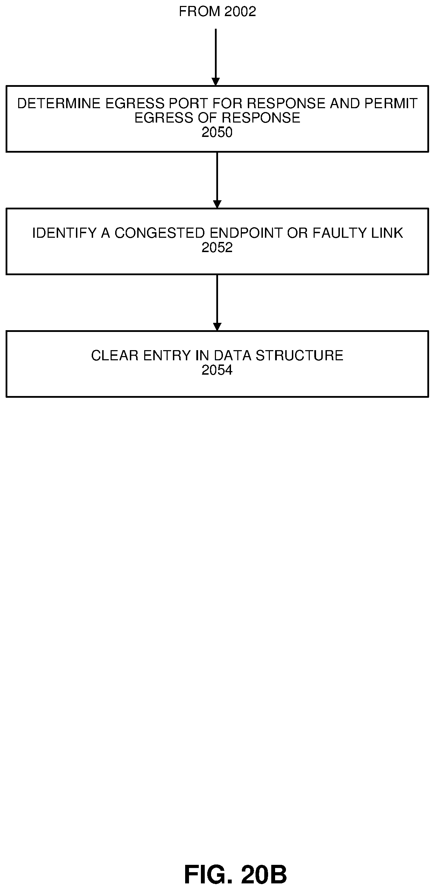

FIGs. 20A and 20B depict an example process. The process can be performed by a network administrator, driver, host-executed OS, or orchestrator, in some examples, to configure routers of a NoC, mesh, or off-chip network (e.g., Ethernet local area network (LAN) or wide area network (WAN)). At 2002, a router can determine if a received packet is a forward packet or a backward response. Based on the received packet being a forward packet, the process can continue to 2004. Based on the received packet being part of a backward response, the process can continue to 2050 (FIG. 20B).

At 2004, the router can determine if there is buffer space available for one or more packets of a backward response. Based on buffer space being available for the one or more packets of the backward response, the process can continue to 2006. Based on buffer space not being available for the one or more packets of the backward response, the process can continue to 2020, and drop the packet. In some examples, at 2020, the router can also transmit a NACK to a sender of the packet to indicate that the router is congested. The sender can take a remedial action of reducing transmit rate, determining another path for other packets of the flow, or other actions.

At 2006, the router can determine if the packet is directed to a congested destination or a path with a faulty link. Based on the packet not being directed to a congested destination or a path with a faulty link, the process can proceed to 2008. Based on the packet being directed to a congested destination or a path with a faulty link, the process can proceed to 2030, and drop the packet one or more hops before reaching the congested device.

At 2008, the router can determine whether to clear the identification of a congested endpoint or link. For example, if an ACK was received from the congested destination or node that is part of faulty link or a re-sent dropped packet was received (e.g., the received forward packet identified in 2002), or a timer for the identification of the congested endpoint or link expired, the process can proceed to 2010. For example, if an ACK was not received from the congested destination or node that is part of faulty link or a re-sent dropped packet was not received, or a timer for the identification of the congested endpoint or link has not expired, the router can determine to retain the identification of a congested endpoint or link and the process can proceed to 2040, and drop the packet.

At 2010, the router can clear identification of a congested destination or node that is part of faulty link and permit other forward packets of a same flow or to same destination associated with the identification to be forwarded. At 2012, the router can reserve buffer space for backward response to the forward packet and record information of the forward packet in a data structure. Various examples of information of the forward packet are described herein, and can include input port and tag identifier.

At 2050, based on the received packet being a backward packet, the router can retrieve an entry from a data structure to determine egress port for a backward packet and permit egress of the backward packet. The backward packet follows same route as corresponding forward packet. At 2052, based on the backward packet identifying a fault or congestion, the router can store identification of congested destination or location of a faulty link in a data structure. At 2054, based on the backward packet not identifying a fault or congestion, the router can clear an entry in the data structure corresponding to the forward and backward packet to allow reuse of the entry for another forward and backward packet(s) pairing.

### EXAMPLE SYSTEM

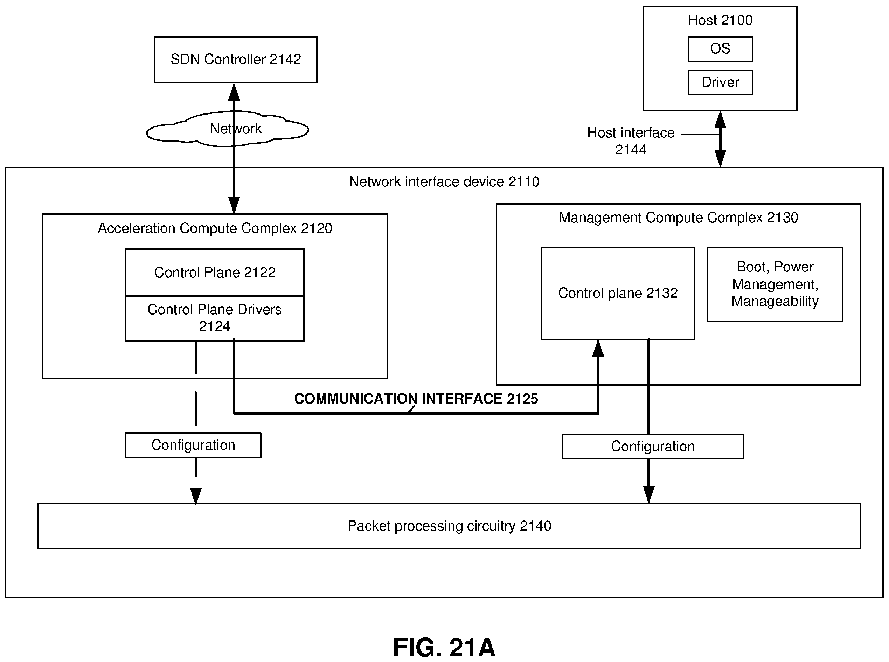

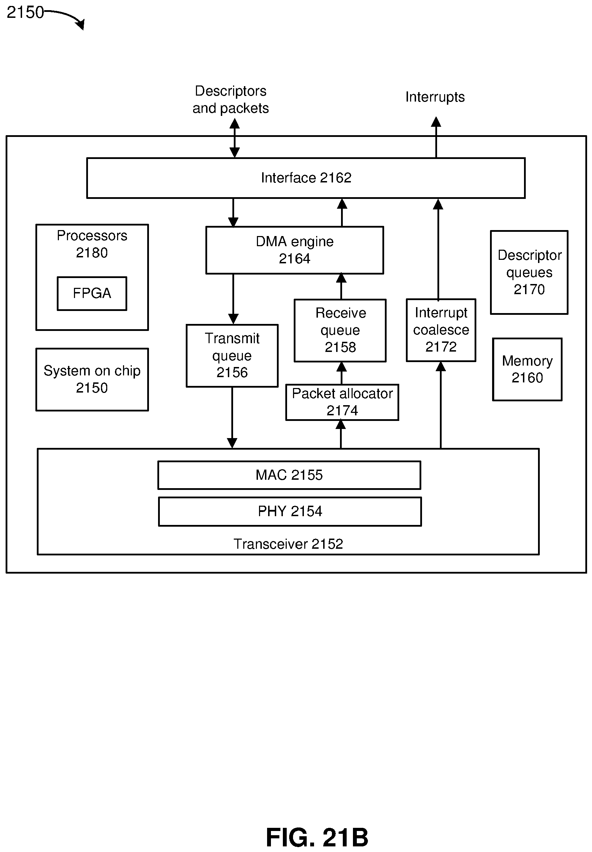

FIG. 21A depicts an example system. Host 2100 can include processors, memory devices, device interfaces, as well as other circuitry such as described with respect to one or more of FIG. 21B. Processors of host 2100 can execute software such as applications (e.g., microservices, virtual machine (VMs), microVMs, containers, processes, threads, or other virtualized execution environments), operating system (OS), and device drivers. An OS or device driver can configure network interface device or packet processing device 2110 to utilize one or more control planes to communicate with software defined networking (SDN) controller 2150 via a network to configure operation of the one or more control planes.

Packet processing device 2110 can include multiple compute complexes, such as an Acceleration Compute Complex (ACC) 2120 and Management Compute Complex (MCC) 2130, as well as packet processing circuitry 2140 and network interface technologies for communication with other devices via a network. ACC 2120 can be implemented as one or more of: a microprocessor, processor, accelerator, field programmable gate array (FPGA), application specific integrated circuit (ASIC) or circuitry described at least with respect to FIG. 21B. Similarly, MCC 2130 can be implemented as one or more of: a microprocessor, processor, accelerator, field programmable gate array (FPGA), application specific integrated circuit (ASIC) or circuitry described at least with respect to FIG. 21B. In some examples, ACC 2120 and MCC 2130 can be implemented as separate cores in a CPU, different cores in different CPUs, different processors in a same integrated circuit, different processors in different integrated circuit.

Packet processing device 2110 can be implemented as one or more of: a microprocessor, processor, accelerator, field programmable gate array (FPGA), application specific integrated circuit (ASIC) or circuitry described at least with respect to FIG. 21B. Packet processing pipeline circuitry 2140 can process packets as directed or configured by one or more control planes executed by multiple compute complexes. In some examples, ACC 2120 and MCC 2130 can execute respective control planes 2122 and 2132.

As described herein, packet processing device 2110, ACC 2120, and/or MCC 2130 can be configured to perform operations described at least with respect to FIGs. 20A and 20B.

SDN controller 2142 can upgrade or reconfigure software executing on ACC 2120 (e.g., control plane 2122 and/or control plane 2132) through contents of packets received through packet processing device 2110. In some examples, ACC 2120 can execute control plane operating system (OS) (e.g., Linux) and/or a control plane application 2122 (e.g., user space or kernel modules) used by SDN controller 2142 to configure operation of packet processing pipeline 2140. Control plane application 2122 can incude Generic Flow Tables (GFT), ESXi, NSX, Kubernetes control plane software, application software for managing crypto configurations, Programming Protocol-independent Packet Processors (P4) runtime daemon, target specific daemon, Container Storage Interface (CSI) agents, or remote direct memory access (RDMA) configuration agents.

In some examples, SDN controller 2142 can communicate with ACC 2120 using a remote procedure call (RPC) such as Google remote procedure call (gRPC) or other service and ACC 2120 can convert the request to target specific protocol buffer (protobuf) request to MCC 2130. gRPC is a remote procedure call solution based on data packets sent between a client and a server. Although gRPC is an example, other communication schemes can be used such as, but not limited to, Java Remote Method Invocation, Modula-3, RPyC, Distributed Ruby, Erlang, Elixir, Action Message Format, Remote Function Call, Open Network Computing RPC, JSON-RPC, and so forth.

In some examples, SDN controller 2142 can provide packet processing rules for performance by ACC 2120. For example, ACC 2120 can program table rules (e.g., header field match and corresponding action) applied by packet processing pipeline circuitry 2140 based on change in policy and changes in VMs, containers, microservices, applications, or other processes. ACC 2120 can be configured to provide network policy as flow cache rules into a table to configure operation of packet processing pipeline 2140. For example, the ACC-executed control plane application 2122 can configure rule tables applied by packet processing pipeline circuitry 2140 with rules to define a traffic destination based on packet type and content. ACC 2120 can program table rules (e.g., match-action) into memory accessible to packet processing pipeline circuitry 2140 based on change in policy and changes in VMs.

For example, ACC 2120 can execute a virtual switch such as vSwitch or Open vSwitch (OVS), Stratum, or Vector Packet Processing (VPP) that provides communications between virtual machines executed by host 2100 or with other devices connected to a network. For example, ACC 2120 can configure packet processing pipeline circuitry 2140 as to which VM is to receive traffic and what kind of traffic a VM can transmit. For example, packet processing pipeline circuitry 2140 can execute a virtual switch such as vSwitch or Open vSwitch that provides communications between virtual machines executed by host 2100 and packet processing device 2110.

MCC 2130 can execute a host management control plane, global resource manager, and perform hardware registers configuration. Control plane 2132 executed by MCC 2130 can perform provisioning and configuration of packet processing circuitry 2140. For example, a VM executing on host 2100 can utilize packet processing device 2110 to receive or transmit packet traffic. MCC 2130 can execute boot, power, management, and manageability software (SW) or firmware (FW) code to boot and initialize the packet processing device 2110, manage the device power consumption, provide connectivity to Baseboard Management Controller (BMC), and other operations.

One or both control planes of ACC 2120 and MCC 2130 can define traffic routing table content and network topology applied by packet processing circuitry 2140 to select a path of a packet in a network to a next hop or to a destination network-connected device. For example, a VM executing on host 2100 can utilize packet processing device 2110 to receive or transmit packet traffic.

ACC 2120 can execute control plane drivers to communicate with MCC 2130. At least to provide a configuration and provisioning interface between control planes 2122 and 2132, communication interface 2125 can provide control-plane-to-control plane communications. Control plane 2132 can perform a gatekeeper operation for configuration of shared resources. For example, via communication interface 2125, ACC control plane 2122 can communicate with control plane 2132 to perform one or more of: determine hardware capabilities, access the data plane configuration, reserve hardware resources and configuration, communications between ACC and MCC through interrupts or polling, subscription to receive hardware events, perform indirect hardware registers read write for debuggability, flash and physical layer interface (PHY) configuration, or perform system provisioning for different deployments of network interface device such as: storage node, tenant hosting node, microservices backend, compute node, or others.

Communication interface 2125 can be utilized by a negotiation protocol and configuration protocol running between ACC control plane 2122 and MCC control plane 2132. Communication interface 2125 can include a general purpose mailbox for different operations performed by packet processing circuitry 2140. Examples of operations of packet processing circuitry 2140 include issuance of non-volatile memory express (NVMe) reads or writes, issuance of Non-volatile Memory Express over Fabrics (NVMe-oF^{™}) reads or writes, lookaside crypto Engine (LCE) (e.g., compression or decompression), Address Translation Engine (ATE) (e.g., input output memory management unit (IOMMU) to provide virtual-to-physical address translation), encryption or decryption, configuration as a storage node, configuration as a tenant hosting node, configuration as a compute node, provide multiple different types of services between different Peripheral Component Interconnect Express (PCIe) end points, or others.

Communication interface 2125 can include one or more mailboxes accessible as registers or memory addresses. For communications from control plane 2122 to control plane 2132, communications can be written to the one or more mailboxes by control plane drivers 2124. For communications from control plane 2132 to control plane 2122, communications can be written to the one or more mailboxes. Communications written to mailboxes can include descriptors which include message opcode, message error, message parameters, and other information. Communications written to mailboxes can include defined format messages that convey data.

Communication interface 2125 can provide communications based on writes or reads to particular memory addresses (e.g., dynamic random access memory (DRAM)), registers, other mailbox that is written-to and read-from to pass commands and data. To provide for secure communications between control planes 2122 and 2132, registers and memory addresses (and memory address translations) for communications can be available only to be written to or read from by control planes 2122 and 2132 or cloud service provider (CSP) software executing on ACC 2120 and device vendor software, embedded software, or firmware executing on MCC 2130. Communication interface 2125 can support communications between multiple different compute complexes such as from host 2100 to MCC 2130, host 2100 to ACC 2120, MCC 2130 to ACC 2120, baseboard management controller (BMC) to MCC 2130, BMC to ACC 2120, or BMC to host 2100.

Packet processing circuitry 2140 can be implemented using one or more of: application specific integrated circuit (ASIC), field programmable gate array (FPGA), processors executing software, or other circuitry. Control plane 2122 and/or 2132 can configure packet processing pipeline circuitry 2140 or other processors to perform operations related to NVMe, NVMe-oF reads or writes, lookaside crypto Engine (LCE), Address Translation Engine (ATE), local area network (LAN), compression/decompression, encryption/decryption, or other accelerated operations.

Various message formats can be used to configure ACC 2120 or MCC 2130. In some examples, a P4 program can be compiled and provided to MCC 2130 to configure packet processing circuitry 2140. The following is a JSON configuration file that can be transmitted from ACC 2120 to MCC 2130 to get capabilities of packet processing circuitry 2140 and/or other circuitry in packet processing device 2110. More particularly, the file can be used to specify a number of transmit queues, number of receive queues, number of supported traffic classes (TC), number of available interrupt vectors, number of available virtual ports and the types of the ports, size of allocated memory, supported parser profiles, exact match table profiles, packet mirroring profiles, among others.

FIG. 21B depicts an example network interface device or packet processing device. In some examples, circuitry of network interface device can be utilized by network interface 2110 (FIG. 21A) or another network interface for packet transmissions and packet receipts, as described herein. In some examples, network interface device 2150 can be implemented as a network interface controller, network interface card, a host fabric interface (HFI), or host bus adapter (HBA), and such examples can be interchangeable. Packet processing device 2150 can be coupled to one or more servers using a bus, PCIe, CXL, or Double Data Rate (DDR). Packet processing device 2150 may be embodied as part of a system-on-a-chip (SoC) that includes one or more processors, or included on a multichip package that also contains one or more processors.

Some examples of network interface device 2150 are part of an Infrastructure Processing Unit (IPU) or data processing unit (DPU) or utilized by an IPU or DPU. An xPU can refer at least to an IPU, DPU, GPU, GPGPU, or other processing units (e.g., accelerator devices). An IPU or DPU can include a network interface with one or more programmable or fixed function processors to perform offload of operations that could have been performed by a CPU. The IPU or DPU can include one or more memory devices. In some examples, the IPU or DPU can perform virtual switch operations, manage storage transactions (e.g., compression, cryptography, virtualization), and manage operations performed on other IPUs, DPUs, servers, or devices.

Network interface 2150 can include transceiver 2152, transmit queue 2156, receive queue 2158, memory 2160, host interface 2162, DMA engine 2164, and processors 2180. Transceiver 2152 can be capable of receiving and transmitting packets in conformance with the applicable protocols such as Ethernet as described in IEEE 802.3, although other protocols may be used. Transceiver 2152 can receive and transmit packets from and to a network via a network medium (not depicted). Transceiver 2152 can include PHY circuitry 2154 and media access control (MAC) circuitry 2155. PHY circuitry 2154 can include encoding and decoding circuitry (not shown) to encode and decode data packets according to applicable physical layer specifications or standards. MAC circuitry 2155 can be configured to assemble data to be transmitted into packets, that include destination and source addresses along with network control information and error detection hash values.

Processors 2180 can be any a combination of a: processor, core, graphics processing unit (GPU), field programmable gate array (FPGA), application specific integrated circuit (ASIC), or other programmable hardware device that allow programming of network interface 2150. For example, a "smart network interface" can provide packet processing capabilities in the network interface using processors 2180.

Processors 2180 can include one or more packet processing pipeline that can be configured to perform match-action on received packets to identify packet processing rules and next hops using information stored in a ternary content-addressable memory (TCAM) tables or exact match tables in some embodiments. For example, match-action tables or circuitry can be used whereby a hash of a portion of a packet is used as an index to find an entry. Packet processing pipelines can perform one or more of: packet parsing (parser), exact match-action (e.g., small exact match (SEM) engine or a large exact match (LEM)), wildcard match-action (WCM), longest prefix match block (LPM), a hash block (e.g., receive side scaling (RSS)), a packet modifier (modifier), or traffic manager (e.g., transmit rate metering or shaping). For example, packet processing pipelines can implement access control list (ACL) or packet drops due to queue overflow.

Configuration of operation of processors 2180, including its data plane, can be programmed based on one or more of: P4, Software for Open Networking in the Cloud (SONiC), Broadcom^{®} Network Programming Language (NPL), NVIDIA^{®} CUDA^{®}, NVIDIA^{®} DOCA^{™}, Data Plane Development Kit (DPDK), OpenDataPlane (ODP), Infrastructure Programmer Development Kit (IPDK), eBPF, x86 compatible executable binaries or other executable binaries, or others.

As described herein, processors 2180 or other circuitry can be configured to perform operations described at least with respect to FIGs. 20A and 20B.

Packet allocator 2174 can provide distribution of received packets for processing by multiple CPUs or cores using timeslot allocation described herein or RSS. When packet allocator 2174 uses RSS, packet allocator 2174 can calculate a hash or make another determination based on contents of a received packet to determine which CPU or core is to process a packet.

Interrupt coalesce 2172 can perform interrupt moderation whereby network interface interrupt coalesce 2172 waits for multiple packets to arrive, or for a time-out to expire, before generating an interrupt to host system to process received packet(s). Receive Segment Coalescing (RSC) can be performed by network interface 2150 whereby portions of incoming packets are combined into segments of a packet. Network interface 2150 provides this coalesced packet to an application.

Direct memory access (DMA) engine 2164 can copy a packet header, packet payload, and/or descriptor directly from host memory to the network interface or vice versa, instead of copying the packet to an intermediate buffer at the host and then using another copy operation from the intermediate buffer to the destination buffer.

Memory 2160 can be any type of volatile or non-volatile memory device and can store any queue or instructions used to program network interface 2150. Transmit queue 2156 can include data or references to data for transmission by network interface. Receive queue 2158 can include data or references to data that was received by network interface from a network. Descriptor queues 2170 can include descriptors that reference data or packets in transmit queue 2156 or receive queue 2158. Host interface 2162 can provide an interface with host device (not depicted). For example, host interface 2162 can be compatible with PCI Express, PCI-x, Serial ATA, and/or USB compatible interface (although other interconnection standards may be used).

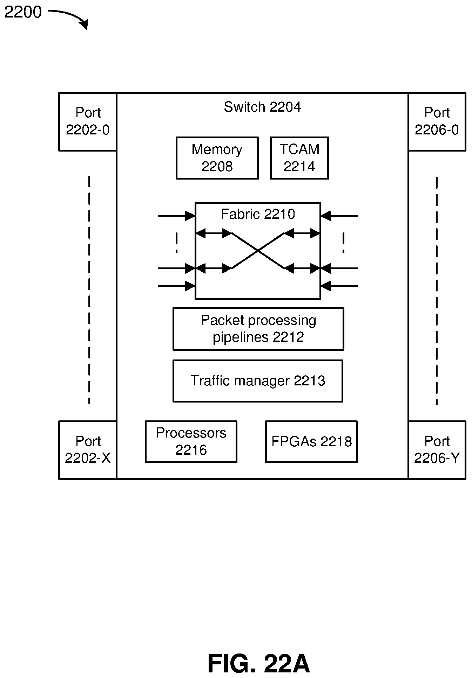

FIG. 22A depicts an example switch. Various examples can perform operations described at least with respect to FIGs. 20A and 20B, as described herein. Switch 2204 can route packets or frames of any format or in accordance with any specification from any port 2202-0 to 2202-X to any of ports 2206-0 to 2206-Y (or vice versa). Any of ports 2202-0 to 2202-X can be connected to a network of one or more interconnected devices. Similarly, any of ports 2206-0 to 2206-Y can be connected to a network of one or more interconnected devices.

In some examples, switch fabric 2210 can provide routing of packets from one or more ingress ports for processing prior to egress from switch 2204. Switch fabric 2210 can be implemented as one or more multi-hop topologies, where example topologies include torus, butterflies, buffered multi-stage, etc., or shared memory switch fabric (SMSF), among other implementations. SMSF can be any switch fabric connected to ingress ports and egress ports in the switch, where ingress subsystems write (store) packet segments into the fabric's memory, while the egress subsystems read (fetch) packet segments from the fabric's memory.

Memory 2208 can be configured to store packets received at ports prior to egress from one or more ports. Packet processing pipelines 2212 can include ingress and egress packet processing circuitry to respectively process ingressed packets and packets to be egressed. Packet processing pipelines 2212 can determine which port to transfer packets or frames to using a table that maps packet characteristics with an associated output port. Packet processing pipelines 2212 can be configured to perform match-action on received packets to identify packet processing rules and next hops using information stored in a ternary content-addressable memory (TCAM) tables or exact match tables in some examples. For example, match-action tables or circuitry can be used whereby a hash of a portion of a packet is used as an index to find an entry (e.g., forwarding decision based on a packet header content). Packet processing pipelines 2212 can implement access control list (ACL) or packet drops due to queue overflow. Packet processing pipelines 2212 can be configured to perform operations described at least with respect to FIGs. 20A and 20B, as described herein. Configuration of operation of packet processing pipelines 2212, including its data plane, can be programmed using P4, C, Python, Broadcom Network Programming Language (NPL), or x86 compatible executable binaries or other executable binaries. Processors 2216 and FPGAs 2218 can be utilized for packet processing or modification.

Traffic manager 2213 can perform hierarchical scheduling and transmit rate shaping and metering of packet transmissions from one or more packet queues. Traffic manager 2213 can perform congestion management such as flow control, congestion notification message (CNM) generation and reception, priority flow control (PFC), and others.

A switch SoC can include a switch fabric, an ingress packet processing pipeline, an egress packet processing pipeline, and/or a traffic manager.

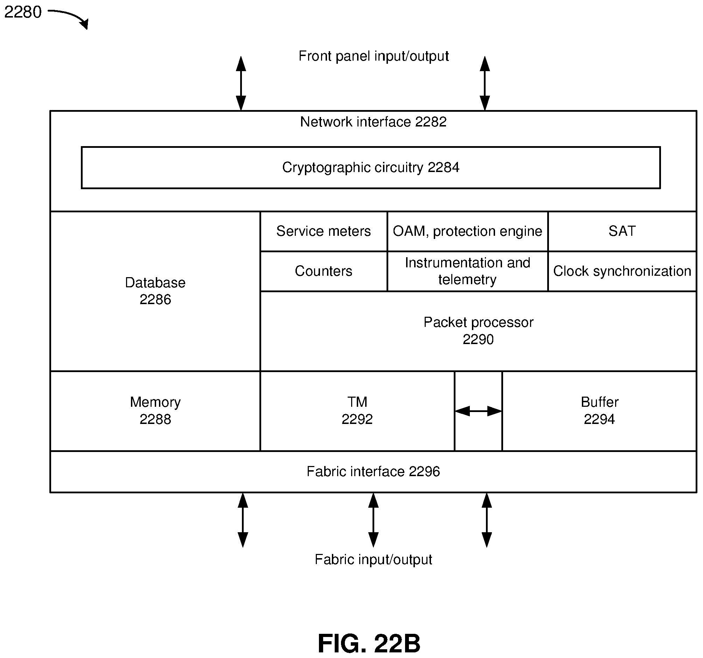

FIG. 22B depicts an example switch. Various examples can be used in or with the switch to perform operations described at least with respect to FIGs. 20A and 20B, as described herein. Switch 2280 can include a network interface 2280 that can provide an Ethernet consistent interface. Network interface 2280 can support for 25 GbE, 50 GbE, 100 GbE, 200 GbE, 400GbE Ethernet port interfaces. Cryptographic circuitry 2284 can perform at least Media Access Control security (MACsec) or Internet Protocol Security (IPSec) decryption for received packets or encryption for packets to be transmitted.

Various circuitry can perform one or more of: service metering, packet counting, operations, administration, and management (OAM), protection engine, instrumentation and telemetry, and clock synchronization (e.g., based on IEEE 1588).

Database 2286 can store a device's profile to configure operations of switch 2280. Memory 2288 can include High Bandwidth Memory (HBM) for packet buffering. Packet processor 2290 can perform one or more of: decision of next hop in connection with packet forwarding, packet counting, access-list operations, bridging, routing, Multiprotocol Label Switching (MPLS), virtual private LAN service (VPLS), L2VPNs, L3VPNs, OAM, Data Center Tunneling Encapsulations (e.g., VXLAN and NV-GRE), or others. Packet processor 2290 can include one or more FPGAs. Buffer 2294 can store one or more packets. Traffic manager (TM) 2292 can provide per-subscriber bandwidth guarantees in accordance with service level agreements (SLAs) as well as performing hierarchical quality of service (QoS). Fabric interface 2296 can include a serializer/de-serializer (SerDes) and provide an interface to a switch fabric.

Operations of components of switches of examples of switches of FIG. 22A or 22B can be combined and components of the switches of examples of FIG. 22A or 22B can be included in other examples of switches of examples of FIG. 22A or 22B. For example, components of examples of switches of FIG. 22A or 22B can be implemented in a switch system on chip (SoC) that includes at least one interface to other circuitry in a switch system. A switch SoC can be coupled to other devices in a switch system such as ingress or egress ports, memory devices, or host interface circuitry.

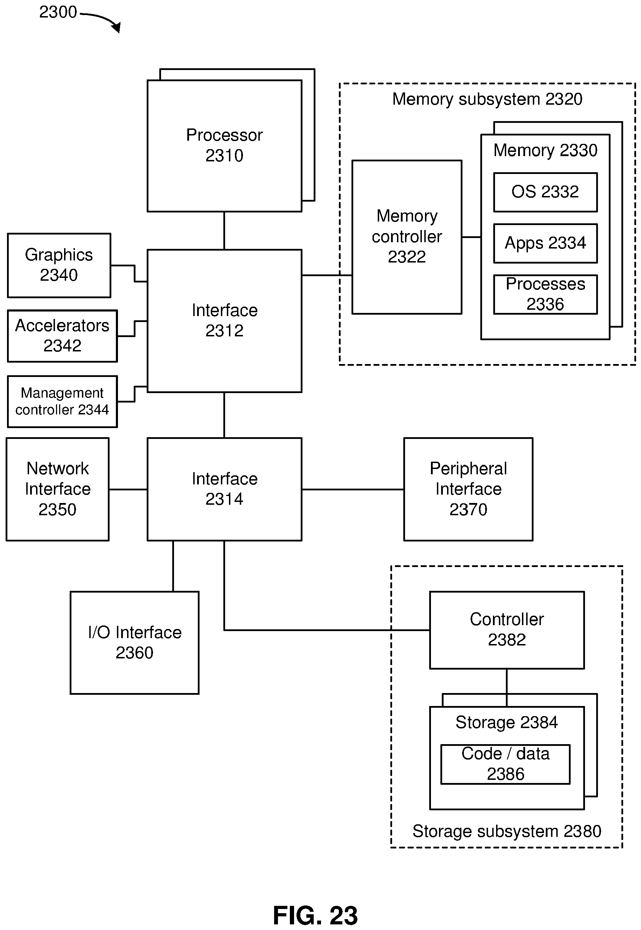

FIG. 23 depicts a system. In some examples, circuitry of network interface device can be utilized to perform operations described at least with respect to FIGs. 20A and 20B, as described herein. System 2300 includes processor 2310, which provides processing, operation management, and execution of instructions for system 2300. Processor 2310 can include any type of microprocessor, central processing unit (CPU), graphics processing unit (GPU), XPU, processing core, or other processing hardware to provide processing for system 2300, or a combination of processors. An XPU can include one or more of: a CPU, a graphics processing unit (GPU), general purpose GPU (GPGPU), and/or other processing units (e.g., accelerators or programmable or fixed function FPGAs). Processor 2310 controls the overall operation of system 2300, and can be or include, one or more programmable general-purpose or special-purpose microprocessors, digital signal processors (DSPs), programmable controllers, application specific integrated circuits (ASICs), programmable logic devices (PLDs), or the like, or a combination of such devices.

In one example, system 2300 includes interface 2312 coupled to processor 2310, which can represent a higher speed interface or a high throughput interface for system components that needs higher bandwidth connections, such as memory subsystem 2320 or graphics interface components 2340, or accelerators 2342. Interface 2312 represents an interface circuit, which can be a standalone component or integrated onto a processor die. Where present, graphics interface 2340 interfaces to graphics components for providing a visual display to a user of system 2300. In one example, graphics interface 2340 can drive a display that provides an output to a user. In one example, the display can include a touchscreen display. In one example, graphics interface 2340 generates a display based on data stored in memory 2330 or based on operations executed by processor 2310 or both. In one example, graphics interface 2340 generates a display based on data stored in memory 2330 or based on operations executed by processor 2310 or both.

Accelerators 2342 can be a programmable or fixed function offload engine that can be accessed or used by a processor 2310. For example, an accelerator among accelerators 2342 can provide data compression (DC) capability, cryptography services such as public key encryption (PKE), cipher, hash/authentication capabilities, decryption, or other capabilities or services. In some cases, accelerators 2342 can be integrated into a CPU socket (e.g., a connector to a motherboard or circuit board that includes a CPU and provides an electrical interface with the CPU). For example, accelerators 2342 can include a single or multi-core processor, graphics processing unit, logical execution unit single or multi-level cache, functional units usable to independently execute programs or threads, application specific integrated circuits (ASICs), neural network processors (NNPs), programmable control logic, and programmable processing elements such as field programmable gate arrays (FPGAs). Accelerators 2342 can provide multiple neural networks, CPUs, processor cores, general purpose graphics processing units, or graphics processing units can be made available for use by artificial intelligence (AI) or machine learning (ML) models. For example, the AI model can use or include any or a combination of: a reinforcement learning scheme, Q-learning scheme, deep-Q learning, or Asynchronous Advantage Actor-Critic (A3C), combinatorial neural network, recurrent combinatorial neural network, or other AI or ML model. Multiple neural networks, processor cores, or graphics processing units can be made available for use by AI or ML models to perform learning and/or inference operations.

Memory subsystem 2320 represents the main memory of system 2300 and provides storage for code to be executed by processor 2310, or data values to be used in executing a routine. Memory subsystem 2320 can include one or more memory devices 2330 such as read-only memory (ROM), flash memory, one or more varieties of random access memory (RAM) such as DRAM, or other memory devices, or a combination of such devices. Memory 2330 stores and hosts, among other things, operating system (OS) 2332 to provide a software platform for execution of instructions in system 2300. Additionally, applications 2334 can execute on the software platform of OS 2332 from memory 2330. Applications 2334 represent programs that have their own operational logic to perform execution of one or more functions. Processes 2336 represent agents or routines that provide auxiliary functions to OS 2332 or one or more applications 2334 or a combination. OS 2332, applications 2334, and processes 2336 provide software logic to provide functions for system 2300. In one example, memory subsystem 2320 includes memory controller 2322, which is a memory controller to generate and issue commands to memory 2330. It will be understood that memory controller 2322 could be a physical part of processor 2310 or a physical part of interface 2312. For example, memory controller 2322 can be an integrated memory controller, integrated onto a circuit with processor 2310.

Applications 2334 and/or processes 2336 can refer instead or additionally to a virtual machine (VM), container, microservice, processor, or other software. Various examples described herein can perform an application composed of microservices, where a microservice runs in its own process and communicates using protocols (e.g., application program interface (API), a Hypertext Transfer Protocol (HTTP) resource API, message service, remote procedure calls (RPC), or Google RPC (gRPC)). Microservices can communicate with one another using a service mesh and be executed in one or more data centers or edge networks. Microservices can be independently deployed using centralized management of these services. The management system may be written in different programming languages and use different data storage technologies. A microservice can be characterized by one or more of: polyglot programming (e.g., code written in multiple languages to capture additional functionality and efficiency not available in a single language), or lightweight container or virtual machine deployment, and decentralized continuous microservice delivery.

In some examples, OS 2332 can be Linux^{®}, Windows^{®} Server or personal computer, FreeBSD^{®}, Android^{®}, MacOS^{®}, iOS^{®}, VMware vSphere, openSUSE, RHEL, CentOS, Debian, Ubuntu, or any other operating system. The OS and driver can execute on a processor sold or designed by Intel^{®}, ARM^{®}, Advanced Micro Devices, Inc. (AMD)^{®}, Qualcomm^{®}, IBM^{®}, Nvidia^{®}, Broadcom^{®}, Texas Instruments^{®}, or compatible with reduced instruction set computer (RISC) instruction set architecture (ISA) (e.g., RISC-V), among others.

In some examples, OS 2332, a system administrator, and/or orchestrator can configure network interface 2350 to perform operations described at least with respect to FIGs. 20A and 20B.

While not specifically illustrated, it will be understood that system 2300 can include one or more buses or bus systems between devices, such as a memory bus, a graphics bus, interface buses, or others. Buses or other signal lines can communicatively or electrically couple components together, or both communicatively and electrically couple the components. Buses can include physical communication lines, point-to-point connections, bridges, adapters, controllers, or other circuitry or a combination. Buses can include, for example, one or more of a system bus, a Peripheral Component Interconnect express (PCIe) bus, a Hyper Transport or industry standard architecture (ISA) bus, a small computer system interface (SCSI) bus, a universal serial bus (USB), or an Institute of Electrical and Electronics Engineers (IEEE) standard 1394 bus (Firewire).

In one example, system 2300 includes interface 2314, which can be coupled to interface 2312. In one example, interface 2314 represents an interface circuit, which can include standalone components and integrated circuitry. In one example, multiple user interface components or peripheral components, or both, couple to interface 2314. Network interface 2350 provides system 2300 the ability to communicate with remote devices (e.g., servers or other computing devices) over one or more networks. Network interface 2350 can include an Ethernet adapter, wireless interconnection components, cellular network interconnection components, USB (universal serial bus), or other wired or wireless standards-based or proprietary interfaces. Network interface 2350 can transmit data to a device that is in the same data center or rack or a remote device, which can include sending data stored in memory. Network interface 2350 can receive data from a remote device, which can include storing received data into memory. In some examples, packet processing device or network interface device 2350 can refer to one or more of: a network interface controller (NIC), a remote direct memory access (RDMA)-enabled NIC, SmartNIC, router, switch, forwarding element, infrastructure processing unit (IPU), or data processing unit (DPU). An example IPU or DPU is described with respect to FIG. 21A and 21B.

In one example, system 2300 includes one or more input/output (I/O) interface(s) 2360. I/O interface 2360 can include one or more interface components through which a user interacts with system 2300. Peripheral interface 2370 can include any hardware interface not specifically mentioned above. Peripherals refer generally to devices that connect dependently to system 2300.

In one example, system 2300 includes storage subsystem 2380 to store data in a nonvolatile manner. In one example, in certain system implementations, at least certain components of storage 2380 can overlap with components of memory subsystem 2320. Storage subsystem 2380 includes storage device(s) 2384, which can be or include any conventional medium for storing large amounts of data in a nonvolatile manner, such as one or more magnetic, solid state, or optical based disks, or a combination. Storage 2384 holds code or instructions and data 2386 in a persistent state (e.g., the value is retained despite interruption of power to system 2300). Storage 2384 can be generically considered to be a "memory," although memory 2330 is typically the executing or operating memory to provide instructions to processor 2310. Whereas storage 2384 is nonvolatile, memory 2330 can include volatile memory (e.g., the value or state of the data is indeterminate if power is interrupted to system 2300). In one example, storage subsystem 2380 includes controller 2382 to interface with storage 2384. In one example controller 2382 is a physical part of interface 2314 or processor 2310 or can include circuits or logic in both processor 2310 and interface 2314.

A volatile memory is memory whose state (and therefore the data stored in it) is indeterminate if power is interrupted to the device. A non-volatile memory (NVM) device is a memory whose state is determinate even if power is interrupted to the device.

In an example, system 2300 can be implemented using interconnected compute sleds of processors, memories, storages, network interfaces, and other components. High speed interconnects can be used such as: Ethernet (IEEE 802.3), remote direct memory access (RDMA), InfiniBand, Internet Wide Area RDMA Protocol (iWARP), Transmission Control Protocol (TCP), User Datagram Protocol (UDP), quick UDP Internet Connections (QUIC), RDMA over Converged Ethernet (RoCE), Peripheral Component Interconnect express (PCIe), Intel QuickPath Interconnect (QPI), Intel Ultra Path Interconnect (UPI), Intel On-Chip System Fabric (IOSF), Omni-Path, Compute Express Link (CXL), HyperTransport, high-speed fabric, NVLink, Advanced Microcontroller Bus Architecture (AMBA) interconnect, OpenCAPI, Gen-Z, Infinity Fabric (IF), Cache Coherent Interconnect for Accelerators (CCIX), 3GPP Long Term Evolution (LTE) (4G), 3GPP 5G, and variations thereof. Data can be copied or stored to virtualized storage nodes or accessed using a protocol such as NVMe over Fabrics (NVMe-oF) or NVMe (e.g., a non-volatile memory express (NVMe) device can operate in a manner consistent with the Non-Volatile Memory Express (NVMe) Specification, revision 1.3c, published on May 24, 2018 ("NVMe specification") or derivatives or variations thereof).

Communications between devices can take place using a network that provides die-to-die communications; chip-to-chip communications; circuit board-to-circuit board communications; and/or package-to-package communications.

In an example, system 2300 can be implemented using interconnected compute sleds of processors, memories, storages, network interfaces, and other components. High speed interconnects can be used such as PCIe, Ethernet, or optical interconnects (or a combination thereof).

Examples herein may be implemented in various types of computing and networking equipment, such as switches, routers, racks, and blade servers such as those employed in a data center and/or server farm environment. The servers used in data centers and server farms comprise arrayed server configurations such as rack-based servers or blade servers. These servers are interconnected in communication via various network provisions, such as partitioning sets of servers into Local Area Networks (LANs) with appropriate switching and routing facilities between the LANs to form a private Intranet. For example, cloud hosting facilities may typically employ large data centers with a multitude of servers. A blade comprises a separate computing platform that is configured to perform server-type functions, that is, a "server on a card." Accordingly, a blade includes components common to conventional servers, including a main printed circuit board (main board) providing internal wiring (e.g., buses) for coupling appropriate integrated circuits (ICs) and other components mounted to the board.

Various examples may be implemented using hardware elements, software elements, or a combination of both. In some examples, hardware elements may include devices, components, processors, microprocessors, circuits, circuit elements (e.g., transistors, resistors, capacitors, inductors, and so forth), integrated circuits, ASICs, PLDs, DSPs, FPGAs, memory units, logic gates, registers, semiconductor device, chips, microchips, chip sets, and so forth. In some examples, software elements may include software components, programs, applications, computer programs, application programs, system programs, machine programs, operating system software, middleware, firmware, software modules, routines, subroutines, functions, methods, procedures, software interfaces, APIs, instruction sets, computing code, computer code, code segments, computer code segments, words, values, symbols, or any combination thereof. Determining whether an example is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given implementation. A processor can be one or more combination of a hardware state machine, digital control logic, central processing unit, or any hardware, firmware and/or software elements.

Some examples may be implemented using or as an article of manufacture or at least one computer-readable medium. A computer-readable medium may include a non-transitory storage medium to store logic. In some examples, the non-transitory storage medium may include one or more types of computer-readable storage media capable of storing electronic data, including volatile memory or non-volatile memory, removable or non-removable memory, erasable or non-erasable memory, writeable or re-writeable memory, and so forth. In some examples, the logic may include various software elements, such as software components, programs, applications, computer programs, application programs, system programs, machine programs, operating system software, middleware, firmware, software modules, routines, subroutines, functions, methods, procedures, software interfaces, API, instruction sets, computing code, computer code, code segments, computer code segments, words, values, symbols, or any combination thereof.

According to some examples, a computer-readable medium may include a non-transitory storage medium to store or maintain instructions that when executed by a machine, computing device or system, cause the machine, computing device or system to perform methods and/or operations in accordance with the described examples. The instructions may include any suitable type of code, such as source code, compiled code, interpreted code, executable code, static code, dynamic code, and the like. The instructions may be implemented according to a predefined computer language, manner or syntax, for instructing a machine, computing device or system to perform a certain function. The instructions may be implemented using any suitable high-level, low-level, object-oriented, visual, compiled and/or interpreted programming language.

One or more aspects of at least one example may be implemented by representative instructions stored on at least one machine-readable medium which represents various logic within the processor, which when read by a machine, computing device or system causes the machine, computing device or system to fabricate logic to perform the techniques described herein. Such representations, known as "IP cores" may be stored on a tangible, machine readable medium and supplied to various customers or manufacturing facilities to load into the fabrication machines that actually make the logic or processor.

The appearances of the phrase "one example" or "an example" are not necessarily all referring to the same example or embodiment. Any aspect described herein can be combined with any other aspect or similar aspect described herein, regardless of whether the aspects are described with respect to the same figure or element. Division, omission, or inclusion of block functions depicted in the accompanying figures does not infer that the hardware components, circuits, software and/or elements for implementing these functions would necessarily be divided, omitted, or included in embodiments.

Some examples may be described using the expression "coupled" and "connected" along with their derivatives. For example, descriptions using the terms "connected" and/or "coupled" may indicate that two or more elements are in direct physical or electrical contact. The term "coupled," however, may also mean that two or more elements are not in direct contact, but yet still co-operate or interact.

The terms "first," "second," and the like, herein do not denote any order, quantity, or importance, but rather are used to distinguish one element from another. The terms "a" and "an" herein do not denote a limitation of quantity, but rather denote the presence of at least one of the referenced items. The term "asserted" used herein with reference to a signal denote a state of the signal, in which the signal is active, and which can be achieved by applying any logic level either logic 0 or logic 1 to the signal. The terms "follow" or "after" can refer to immediately following or following after some other event or events. Other sequences of operations may also be performed according to alternative embodiments. Furthermore, additional operations may be added or removed depending on the particular applications. Any combination of changes can be used and one of ordinary skill in the art with the benefit of this disclosure would understand the many variations, modifications, and alternative embodiments thereof.

Disjunctive language such as the phrase "at least one of X, Y, or Z," unless specifically stated otherwise, is otherwise understood within the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to be present. Additionally, conjunctive language such as the phrase "at least one of X, Y, and Z," unless specifically stated otherwise, should also be understood to mean X, Y, Z, or any combination thereof, including "X, Y, and/or Z."'

Illustrative examples of the devices, systems, and methods disclosed herein are provided below. An embodiment of the devices, systems, and methods may include any one or more, and any combination of, the examples described below.

Example 1 includes one or more examples, and includes an apparatus comprising: an interface and circuitry coupled to the interface, the circuitry configured to: reserve a memory region in a buffer for a response sent by a receiver of a forwarded packet.

Example 2 includes one or more examples, wherein the circuitry is to: based on receipt of the response, re-allocate the memory region in the buffer to a second packet or second response, wherein the response comprises at least one packet associated with the forwarded packet and sent by the receiver of the forwarded packet.

Example 3 includes one or more examples, wherein the circuitry is to: based on lack of space in the buffer for the response, drop a received packet instead of forwarding the received packet as the forwarded packet.

Example 4 includes one or more examples, wherein the circuitry is to: prioritize egress of responses over forwarded packets.

Example 5 includes one or more examples, comprising a memory, wherein the buffer is allocated in the memory.

Example 6 includes one or more examples, wherein the forwarded packet comprises one or more of: a path to the receiver, a path from the receiver to a sender, a current hop, a total number of hops, or a transaction type.

Example 7 includes one or more examples, wherein the response comprises one or more of: a result status, a drop location, transaction type, or a current hop and wherein the transaction type comprises one or more of: read, write, acknowledge (ACK), or negative ACK (NACK).

Example 8 includes one or more examples, comprising a network on chip (NoC) comprising multiple routers and interfaces to endpoint devices, wherein at least one of the multiple routers includes the interface and the circuitry.

Example 9 includes one or more examples, comprising a switch system on chip (SoC), wherein the switch SoC includes the interface, the circuitry, and one or more of: a switch fabric, ingress packet processing pipeline, egress packet processing pipeline, or traffic manager.

Example 10 includes one or more examples, and includes a method comprising: configuring one or more routers in a network to: reserve a memory region in a buffer for a response sent by a receiver of a forwarded packet.

Example 11 includes one or more examples, comprising: configuring one or more routers in the network to: based on receipt of the response, re-allocate the memory region in the buffer to a second packet or second response, wherein the response comprises at least one packet associated with the forwarded packet and sent by the receiver of the forwarded packet.

Example 12 includes one or more examples, comprising: configuring one or more routers in the network to: based on lack of space in the buffer for the response, drop a received packet instead of forwarding the received packet as the forwarded packet.

Example 13 includes one or more examples, wherein the forwarded packet comprises one or more of: a path to the receiver, a path from the receiver to a sender, a current hop, a total number of hops, or a transaction type.

Example 14 includes one or more examples, wherein the response comprises one or more of: a result status, a drop location, transaction type, or a current hop and wherein the transaction type comprises one or more of: read, write, acknowledge (ACK), or negative ACK (NACK).

Example 15 includes one or more examples, and includes at least one non-transitory computer-readable medium comprising instructions stored thereon, that if executed by one or more circuitry of a router, cause the one or more circuitry of the router to: reserve a memory region in a buffer for a response sent by a receiver of a forwarded packet.

Example 16 includes one or more examples, and includes instructions stored thereon, that if executed by one or more circuitry of a router, cause the one or more circuitry of the router to: based on receipt of the response, re-allocate the memory region in the buffer to a second packet or second response, wherein the response comprises at least one packet associated with the forwarded packet and sent by the receiver of the forwarded packet.

Example 17 includes one or more examples, and includes instructions stored thereon, that if executed by one or more circuitry of a router, cause the one or more circuitry of the router to: based on lack of space in the buffer for the response, drop a received packet instead of forwarding the received packet as the forwarded packet.

Example 18 includes one or more examples, wherein the forwarded packet comprises one or more of: a path to the receiver, a path from the receiver to a sender, a current hop, a total number of hops, or a transaction type.

Example 19 includes one or more examples, wherein the response comprises one or more of: a result status, a drop location, transaction type, or a current hop and wherein the transaction type comprises one or more of: read, write, acknowledge (ACK), or negative ACK (NACK).

Example 20 includes one or more examples, wherein the response and the forwarded packet traverse a same path through routers, but in opposite directions.

## Claims

1. An apparatus comprising:
an interface and
circuitry coupled to the interface, the circuitry configured to:
reserve a memory region in a buffer for a response sent by a receiver of a forwarded packet.

2. The apparatus of claim 1, wherein the circuitry is to:
based on receipt of the response, re-allocate the memory region in the buffer to a second packet or second response, wherein the response comprises at least one packet associated with the forwarded packet and sent by the receiver of the forwarded packet.

3. The apparatus of claim 1, wherein the circuitry is to:
based on lack of space in the buffer for the response, drop a received packet instead of forwarding the received packet as the forwarded packet.

4. The apparatus of claim 1, comprising a memory, wherein the buffer is allocated in the memory.

5. The apparatus of claim 1, wherein the forwarded packet comprises one or more of: a path to the receiver, a path from the receiver to a sender, a current hop, a total number of hops, or a transaction type.

6. The apparatus of claim 1, wherein the response comprises one or more of: a result status, a drop location, transaction type, or a current hop and wherein the transaction type comprises one or more of: read, write, acknowledge (ACK), or negative ACK (NACK).

7. The apparatus of claim 1, comprising a network on chip (NoC) comprising multiple routers and interfaces to endpoint devices, wherein at least one of the multiple routers includes the interface and the circuitry.

8. The apparatus of claim 1, comprising a switch system on chip (SoC), wherein the switch SoC includes the interface, the circuitry, and one or more of: a switch fabric, ingress packet processing pipeline, egress packet processing pipeline, or traffic manager.

9. The apparatus of any of claims 1-8, wherein the circuitry is to prioritize egress of responses over forwarded packets.

10. A method comprising:
configuring one or more routers in a network to:
reserve a memory region in a buffer for a response sent by a receiver of a forwarded packet.

11. The method of claim 10, comprising:
configuring one or more routers in the network to:
based on receipt of the response, re-allocate the memory region in the buffer to a second packet or second response, wherein the response comprises at least one packet associated with the forwarded packet and sent by the receiver of the forwarded packet.

12. The method of claim 10, comprising:
configuring one or more routers in the network to:
based on lack of space in the buffer for the response, drop a received packet instead of forwarding the received packet as the forwarded packet.

13. The method of claim 10, wherein the forwarded packet comprises one or more of: a path to the receiver, a path from the receiver to a sender, a current hop, a total number of hops, or a transaction type.

14. The method of any of claims 10-13, wherein the response comprises one or more of: a result status, a drop location, transaction type, or a current hop and wherein the transaction type comprises one or more of: read, write, acknowledge (ACK), or negative ACK (NACK).

15. A computer-readable medium comprising instructions that if executed, by one or more processors, implement a method or realise an apparatus as claimed in any preceding claim.
